(19) Europäisches Patentamt
European Patent Office
Office européen des brevets

(11) **EP 4 641 436 A1**

(12) **EUROPEAN PATENT APPLICATION**

(43) Date of publication:
**29.10.2025 Bulletin 2025/44**

(21) Application number: **25171936.5**

(22) Date of filing: **23.04.2025**

(51) International Patent Classification (IPC):
*G06F 40/30* (2020.01)　　*G06F 40/103* (2020.01)
*G06N 3/0475* (2023.01)

(52) Cooperative Patent Classification (CPC):
**G06F 40/30; G06F 40/103; G06N 3/044;
G06N 3/045; G06N 3/047; G06N 3/0475;
G06N 3/08; G06N 3/084; G06N 3/088; G06N 3/096;
G06N 5/022; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024 AU 2024202694
01.05.2024 AU 2024202881
01.05.2024 AU 2024202882
01.05.2024 AU 2024202883
01.05.2024 AU 2024202884
01.05.2024 AU 2024202886
16.08.2024 AU 2024205835**

(71) Applicant: **Canva Pty Ltd.
Surry Hills, New South Wales 2010 (AU)**

(72) Inventors:
• **RAMSAUER, Hubert
Surry Hills, NSW 2010 (AU)**
• **BAIXAULI, Emilio Tylson
Surry Hills, NSW 2010 (AU)**

(74) Representative: **Chettle, John Edward et al
Venner Shipley LLP
200 Aldersgate
London EC1A 4HD (GB)**

(54) **A DESIGN GENERATION SYSTEM**

(57) A retrieval-based design generation system configured to generate editable designs is disclosed. The system includes an auto-regressive pre-trained large language model (LLM) configured to: receive a prompt to generate the editable design; sequentially generate a set of tokens of model representation data for the editable design, the set of tokens including a predicted special token associated with a design asset; provide each sequentially generated non-special token of the set of tokens as an input to the LLM to generate a next token in the set of tokens; replace the predicted special token with a replacement special token associated with a design asset stored in a design asset library; and provide the replacement special token as the input to the LLM to generate the next token in the set of tokens.

EP 4 641 436 A1

**Description**

## TECHNICAL FIELD

Aspects of the present disclosure are directed to systems and methods for generating digital designs and more particularly to using machine learning models to automatically generate digital designs based on input prompts.

## BACKGROUND

Various computer applications for creating and publishing digital designs exist. Generally speaking, such applications allow users to create a digital design by, for example, creating a page and adding design elements, such as text, images, audio clips, video clips, etc., to that page.

Often such applications provide a number of design templates in various design categories to aid users in creating designs. Users can select a design template from the available templates and customize it to create their own design, by e.g., customizing or changing one or more of the design elements available in the design template.

However, existing applications and techniques may be ineffective and/or unable to automatically create or edit digital designs.

## SUMMARY

Described herein is a retrieval-based design generation system configured to generate editable designs. The system includes an auto-regressive pre-trained large language model (LLM) configured to: receive a prompt to generate the editable design; sequentially generate a set of tokens of model representation data for the editable design, the set of tokens including a predicted special token associated with a design asset; provide each sequentially generated non-special token of the set of tokens as an input to the LLM to generate a next token in the set of tokens; replace the predicted special token with a replacement special token associated with a design asset stored in a design asset library; and provide the replacement special token as the input to the LLM to generate the next token in the set of tokens.

## BRIEF DESCRIPTION OF THE DRAWINGS

In the drawings:

Fig. 1 is a block diagram depicting a networked environment in which various features of the present disclosure may be implemented.

Fig. 2 is a block diagram of a computer processing system configurable to perform various features of the present disclosure.

Fig. 3 is a block diagram depicting a design generation system configured to perform various features of the present disclosure.

Fig. 4 is a block diagram of a decoder-only transformer architecture on which a large language model of the design generation module can be configured to generate digital designs according to aspects of the present disclosure.

Fig. 5A illustrates an example graphical user interface for receiving a design generation request according to some embodiments of the present disclosure.

Fig. 5B illustrates an example graphical user interface for viewing and editing designs according to some embodiments of the present disclosure.

Fig. 6 is a flowchart depicting an example method for generating training data according to some embodiments of the present disclosure.

Fig. 7 is a flowchart illustrating an example method for generating model representation data according to some embodiments of the present disclosure.

Fig. 8 is a flowchart depicting an example method for generating design descriptions according to some embodiments of the present disclosure.

Fig. 9 is a flowchart illustrating an example method for training the design generation system according to some embodiments of the present disclosure.

Fig. 10 is a flowchart illustrating an example method for instructing the design generation system 120 to generate a design.

Fig. 11 is a flowchart illustrating an example method for generating a model prompt.

Fig. 12 is a flowchart depicting an example method for generating a design according to some embodiments of the present disclosure.

Fig. 13 is a flowchart depicting an example method for retrieving design assets according to some embodiments of the present disclosure.

Fig. 14 is a flowchart depicting an example method for rendering a design.

Fig. 15 is a graphical user interface depicting a design generated by the design generation system.

Fig. 16 is a flowchart illustrating an example method for selecting a design from a set of candidate designs.

Fig. 17 is a schematic that illustrates an issue with incorrect aspect ratio image placeholders in a design.

Fig. 18 is a flowchart depicting an example method for retrieving image assets and aspect ratio according to some embodiments of the present disclosure.

Fig. 19 is a schematic illustrating retrieval of image assets and aspect ratio according to some embodiments of the present disclosure.

While the description is amenable to various modifications and alternative forms, specific embodiments are shown by way of example in the drawings and are described in detail. It should be understood, however, that the drawings and detailed description are not intended to limit the invention to the particular form disclosed. The intention is to cover all modifications, equivalents, and alternatives falling within the scope of the present invention as defined by the appended claims.

## DETAILED DESCRIPTION

In the following description, numerous specific details are set forth in order to provide a thorough understanding of the present invention. It will be apparent, however, that the present invention may be practiced without these specific details. In some instances, well-known structures and devices are shown in block diagram form in order to avoid unnecessary obscuring.

Generally speaking, aspects of the present disclosure are utilized in systems and methods for creating digital designs. In particular, the techniques disclosed herein are described in the context of a computer application that is configured to facilitate the creation of digital designs. By way of example, and generally speaking, the computer application may provide user interfaces that allow a user to create and edit a digital design by adding, deleting, or modifying design elements (such as graphics and/or text) in a design template.

As described previously, most digital design computer applications present a plethora of design templates and design elements to users in various design categories. They also provide a design editor tool that allows users to generate designs by selecting design templates and design elements and then modifying the design elements (e.g., changing font type, size, and colour, changing design elements, moving design elements around, etc.).

In case a computer application offers hundreds of thousands of templates and design elements and increased flexibility to modify or edit designs, pre-existing applications and techniques may be ineffective and/or unable to identify the most suitable design template(s) for selection. Such pre-existing applications and techniques may make the task of creating or modifying a design challenging for users. For example, a user may find it challenging to create a professional looking design that is suitable for client presentations using existing applications. In other cases, a user may not be aware of the various features of the design application and therefore may be unable to utilize the editor tool to its full potential to achieve a desired result. These types of situations may result in the creation of unsuitable or substandard digital designs.

Further still, even if a user is adept at using a design application and creating designs, pre-existing applications may require the user to perform numerous steps to create a design, including e.g., perusing a plethora of design templates, selecting a design template, and performing several design edits (such as adding, deleting, moving design elements) to the design template to achieve a desired design intent. This can be tedious, result in a number of additional computation steps, and increase the cognitive burden on the user.

To aid with one or more of the above-identified issues, aspects of the present disclosure provide systems, methods, and/or computer readable media that are configured to automatically generate one or more digital designs based on one or more input prompts. The input prompts may be short descriptions of the desired design, e.g., "a postcard about harmony between Vienna and Sydney." The presently disclosed systems and method may automatically generate one or more designs or design previews based on such inputs.

To do so, aspects of the present disclosure utilize a retrieval-based design generation system that includes one or more machine learning models. The design generation system further includes or is communicably connected to one or more databases that store design assets including images, colours, vector graphics, fonts, etc. During inference, the one or more machine learning models of the retrieval-based design generation system may select one or more design assets from these databases and combine the various selected design assets to generate the one or more designs.

In some embodiments, the one or more machine learning models may output a design as a textual design representation (referred to as model representation data herein). The model representation data is a semi-structured format that represents a design as a sequence of design components. That is, each design component in the model representation data has a structured format, but the model representation data may be extensible to include any combination of such design components. An output module receives the model representation data and converts this into a digital design for rendering on client devices.

As the designs generated by the techniques disclosed herein are created based on the model representation data (which includes individual design components), the generated designs are editable - that is, users may be able to edit individual elements in the design, e.g., by changing their positions, orientations, transparency, size, colour, etc. Further, users may be able to delete elements from the designs or add further elements to the design.

An editable design may, for example, be contrasted with a non-editable design. In the context of the present disclosure, a non-editable design is one in which individual design elements are not able to be selected, edited, or deleted. By way of example, non-editable designs include raster images such as jpeg, png, gif, and/or other raster format files. Furthermore, while the techniques described herein provide for the generation of editable designs, further processing can (if desired) be performed to convert an editable design into a non-editable design (e.g. by processing the editable design to rasterise or flatten (or otherwise convert) the editable design into a non-editable version thereof).

The design generation system is a multimodal system, i.e., it is a system that is capable of processing and integrating information from multiple modalities or sources of data. The modalities may be distinct types of data such as text, images, vector graphics, audio, video, colours, fonts, element locations, and dimensions.

Further, the design generation system is able to understand the relationship between different modalities regardless of their data type. To do so, the design generation system is trained to capture the visual and/or aural quality and semantics of images, vector graphics, audio, video, colours, fonts, and text and relate them not only to a given design intent, but to each other as well. As the model incorporates multiple types of data modalities, it is able to achieve a more comprehensive and holistic understanding of designs.

These and other aspects of the present disclosure will now be described in detail with reference to the following figures.

## *Network architecture and system*

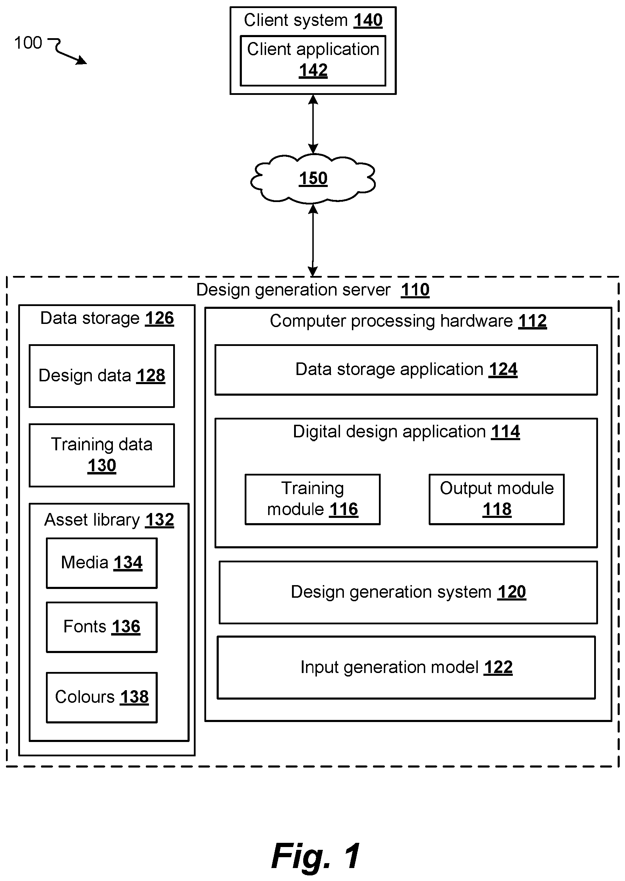

FIG. 1 is a block diagram depicting a networked environment 100 in which various features of the present disclosure may be implemented. The environment 100 includes server- and client-side applications, which operate together to perform the processing described herein. In particular, it includes a design generation server 110 and a client system 140, which communicate via one or more communications networks 150 (e.g., the Internet).

The design generation server 110 includes computer processing hardware 112 (discussed below) on which applications that provide server-side functionality to client applications such as client application 142 (described below) execute. In the present example, the design generation server 110 includes a digital design application 114, a design generation system 120, an input generation model 122, and a data storage application 124.

The digital design application 114 may execute to provide a client application endpoint that is accessible over the communications network 150. For example, where the digital design application 114 serves web browser client applications, the digital design application 114 will be hosted by a web server which receives and responds (for example) to HTTP requests. Where the digital design application 114 serves native client applications, the digital design application 114 may be hosted by an application server configured to receive, process, and respond to specifically defined API calls received from those client applications. The design generation server 110 may include one or more web server applications and/or one or more application server applications allowing it to interact with both web and native client applications.

The digital design application 114 facilitates various functions related to creating and editing designs in the design generation server 110. This may include, for example, creating, editing, storing, searching, retrieving, and/or viewing designs. The digital design application 114 may also facilitate additional functions that are typical of server systems - for example user account creation and management, user authentication, and/or other server-side functions. Each of these functionalities may be provided by individual applications, e.g., an account management application (not shown) for account creation and management, a design creation application (not shown) to aid users in creating, editing, storing designs, a management application (not shown) that is configured to maintain and store design templates and media items in the data storage, etc.

In addition to these applications, the digital design application 114 includes a training module 116, and an output module 118. The training module 116 is configured to generate training data, and train one or more of the design generation systems 120 and/or input generation model 122 based on the generated training data. For example, it may train the design generation system 120 until it can generate designs that sufficiently accurately match a given intent or prompt. The output module 118 is configured to receive model representation data representing one or more designs from the design generation system 120 and render designs and/or design previews for display on one or more display devices of client system 140. Operations of these modules will be described in more detail later.

The design generation system 120 is trained to receive one or more prompts and generate design representation data for one or more designs based on the prompt. Operation and training of this system will be described in more detail later.

The input generation model 122 includes one or more trained machine learning models that receive input prompts and generate contextual design descriptions that can be used to train the design generation system 120 and/or can be used by the design generation system 120 to generate designs.

Although the design generation system 120 and the input generation model 122 are depicted as part of the design generation server 110, in some embodiments, one or more of these may be an independent application hosted by one or more different server systems.

The data storage application 124 executes to receive and process requests to persistently store and retrieve data relevant to the operations performed/services provided by the digital design application 114, the design generation system 120 and/or the input generation model 122. Such requests may be received from the digital design application 114, the design generation system 120, and/or the input generation model 122, and/or (in some instances) directly from client applications such as 142.

The data storage application 124 may, for example, be a relational database management application or an alternative application for storing and retrieving data from data storage 126. Data storage 126 may be any appropriate data storage device (or set of devices), for example one or more non-transient computer readable storage devices such as hard disks, solid state drives, tape drives, or alternative computer readable storage devices.

In design generation server 110, the digital design application 114 persistently stores data to data storage 126 via the data storage application 124. In alternative implementations, however, the digital design application 114 may be configured to directly interact with data storage devices such as 126 to store and retrieve data (in which case a separate data storage application 124 may not be needed). Furthermore, while a single data storage application 124 is described, the design generation server 110 may include multiple data storage applications.

The data storage 126 maintains data relevant to the operations performed/services provided by the digital design application 114, the design generation system 120 and/or the input generation model 122. In some embodiments, the data storage 126 includes a design data library 128 (that stores data describing designs created by users, design templates, and/or designs output by the output module 118). It further includes a design asset library 132 that stores design assets that may be utilized by the design generation system 120 during design generation. The design asset library 132 may include amongst other data, a media library 134 (e.g. a library of media items such as images, vector graphics, videos and audio that may be utilized by the design generation system 120 during design generation), a font library 136 (e.g. a library of fonts and font palettes) and a colour library 138 (e.g. a library of colours and colour palettes).

In addition, the data storage 126 include includes a training data store 130 that stores training data required to train the design generation system 120 and/or the input generation model 122. The training data may include multiple training data records. For instance, it may include training data records for training the input generation model 122, and training data records for training the design generation system 120. Some of the data stored by the data storage 126 will be described in detail in the following sections.

Although a single data storage 126 is displayed in Fig. 1, it will be appreciated that the data storage 126 may include multiple individual data stores for storing different types of data. For example, one data store may be used for user account data, another for design data, another for design asset data, another for training data, and so forth.

As noted, the digital design application 114, the design generation system 120 and/or the input generation model 122 run on (or are executed by) computer processing hardware 112. Computer processing hardware 112 includes one or more computer processing systems. The precise number and nature of those systems will depend on the architecture of the design generation server 110.

For example, in one implementation multiple instances of the digital design application 114, the design generation system 120, and/or the input generation model 122 may run on their own dedicated computer processing system. In another implementation, two or more instances of the digital design applications 114, the design generation system 120 and/or the input generation model 122 may run on a common/shared computer processing system. In a further implementation, design generation server 110 is scalable in which application instances (and the computer processing hardware 112 - i.e. the specific computer processing systems required to run those instances) are commissioned and decommissioned according to demand - e.g., in a public or private cloud-type system. In this case, design generation server 110 may simultaneously run multiple instances of each application 114-120 (on one or multiple computer processing systems) as required by client demand. Where the design generation server 110 is a scalable system, it will include additional applications to those illustrated and described. As one example, the design generation server 110 may include a load balancing application (not shown) which operates to determine demand, direct client traffic to the appropriate application instance (where multiple applications have been commissioned), trigger the commissioning of additional applications (and/or computer processing systems to run those applications) if required to meet the current demand, and/or trigger the decommissioning of server applications (and computer processing systems) if they are not functioning correctly and/or are not required for current demand.

Communication between the applications and computer processing systems of the design generation server 110 may be by any appropriate means, for example direct communication or networked communication over one or more local area networks, wide area networks, and/or public networks (with a secure logical overlay, such as a VPN, if required).

The present disclosure describes various operations that are performed by applications of the design generation server 110. However, operations described as being performed by a particular application (e.g., training module 116) could be performed by one or more alternative applications, and/or operations described as being performed by multiple separate applications could in some instances be performed by a single application.

Client system 140 hosts a client application 142 which, when executed by the client system 140, configures the client system 140 to provide client-side functionality/interact with the design generation server 110. Via the client application 142, and as discussed in detail below, a user can access the various techniques described herein - e.g., the user can input prompts to generate designs, view and/or preview designs generated by the design generation server 110, edit, or publish one or more designs, etc. Client application 142 may also provide a user with access to additional design related operations, such as creating, editing, saving, publishing, sharing, and/or other design related operations.

The client application 142 may be a general web browser application which accesses the digital design application 114 and/or the data storage application 124 via an appropriate uniform resource locator (URL) and communicates with these server applications via general world-wide-web protocols (e.g. HTTP, HTTPS, FTP). Alternatively, the client application 142 may be a native application programmed to communicate with digital design application 114 and/or the data storage application 124 using defined application programming interface (API) calls and responses.

A given client system such as 140 may have more than one client application 142 installed and executing thereon. For example, a client system 140 may have a (or multiple) general web browser application(s) and a native client application.

The present disclosure describes some method steps and/or processing as being performed by the client application 142. In certain embodiments, the functionality described may be natively provided by the client application 142 (e.g. the client application 142 itself has instructions and data which, when executed, cause the client application 142 to perform the described steps or functions). In alternative embodiments, the functionality described herein may be provided by a separate software module (such as an add-on or plug-in) that operates in conjunction with the client application 142 to expand the functionality thereof.

While the embodiments described below make use of a client-server architecture, the techniques and processing described herein could be adapted to be executed in a stand-alone context - e.g. by an application (or set of applications) that run on a computer processing system and can perform all required functionality without need of a server environment or application.

The techniques and operations described herein are performed by one or more computer processing systems.

By way of example, client system 140 may be any computer processing system which is configured (or configurable) by hardware and/or software - e.g. client application 142 - to offer client-side functionality. A client system 140 may be a desktop computer, laptop computer, tablet computing device, mobile/smart phone, or other appropriate computer processing system.

Similarly, the applications of the design generation server 110 are also executed by one or more computer processing systems (the computer processing hardware 112). Server computer processing systems will typically be server systems, though again may be any appropriate computer processing systems.

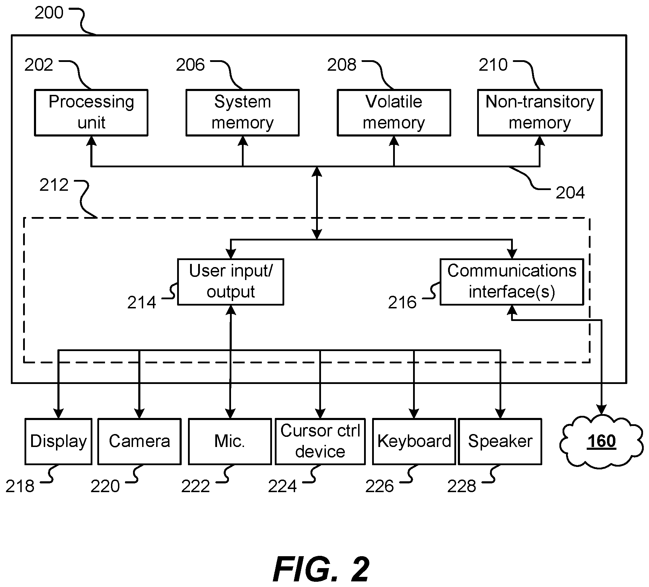

FIG. 2 provides a block diagram of a computer processing system 200 configurable to implement embodiments and/or features described herein. System 200 is a general-purpose computer processing system. It will be appreciated that FIG. 2 does not illustrate all functional or physical components of a computer processing system. For example, no power supply or power supply interface has been depicted, however system 200 either carries a power supply or is configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable (either in a shared or dedicated manner) by system 200.

Through a communications bus 204 the processing unit 202 is in data communication with a one or more machine readable storage (memory) devices which store computer readable instructions and/or data which are executed by the processing unit 202 to control operation of the processing system 200. In this example system 200 includes a system memory 206 (e.g. a BIOS), volatile memory 208 (e.g. random-access memory such as one or more DRAM modules), and non-transitory memory 210 (e.g. one or more hard disk or solid-state drives).

System 200 also includes one or more interfaces, indicated generally by 212, via which system 200 interfaces with various devices and/or networks. Other devices may be integral with system 200, or may be separate. Where a device is separate from system 200, the connection between the device and system 200 may be via wired or wireless hardware and communication protocols and may be a direct or an indirect (e.g. networked) connection.

Generally speaking, and depending on the system in question, devices to which system 200 connects include one or more input devices to allow data to be input into/received by system 200 and one or more output device to allow data to be output by system 200.

By way of example, where system 200 is a personal computing device such as a desktop or laptop device, it may include a display 218 (which may be a touch screen display and as such operate as both an input and output device), a camera device 220, a microphone device 222 (which may be integrated with the camera device), a cursor control device 224 (e.g. a mouse, trackpad, or other cursor control device), a keyboard 226, and a speaker device 228.

As another example, where system 200 is a portable personal computing device such as a smart phone or tablet it may include a touchscreen display 218, a camera device 220, a microphone device 222, and a speaker device 228.

Where client application 142 operates to display controls, interfaces, or other objects, client application 142 does so via one or more displays that are connected to (or integral with) system 200 - e.g. display 218. Where client application 142 operates to receive or detect user input, such input is provided via one or more input devices that are connected to (or integral with) system 200 - e.g. touch screen, touch screen display 218, cursor control device 224, keyboard 226, and/or an alternative input device.

As another example, where system 200 is a server computing device it may be remotely operable from another computing device via a communication network (e.g., network 150). Such a server may not itself need/require further peripherals such as a display, keyboard, cursor control device etc. (though may nonetheless be connectable to such devices via appropriate ports).

Alternative types of computer processing systems, with additional/alternative input and output devices, are possible.

System 200 also includes one or more communications interfaces 216 for communication with a network, such as network 150 of environment 100 (and/or a local network within the design generation server 110). Via the communications interface(s) 216, system 200 can communicate data to and receive data from networked systems and/or devices.

System 200 stores or has access to computer applications (which may also be referred to as computer software or computer programs). Such applications include computer readable instructions and data which, when executed by the processing unit 202, configure system 200 to receive, process, and output data. Instructions and data can be stored on non-transitory machine-readable medium such as 210 accessible to system 200. Instructions and data may be transmitted to/received by system 200 via a data signal in a transmission channel enabled (for example) by a wired or wireless network connection over an interface such as communications interface 216.

Typically, one application accessible to system 200 will be an operating system application. In addition, system 200 will store or have access to applications which, when executed by the processing unit 202, configure system 200 to perform various computer-implemented processing operations described herein. For example and referring to the networked environment of FIG. 1 above, design generation server 110 includes one or more systems which run a design application 114, a data storage application 124, the design generation system 120 and/or the input generation model 122. Similarly, client system 140 runs a client application 142.

In some cases, part or all of a given computer-implemented method will be performed by system 200 itself, while in other cases processing may be performed by other devices in data communication with system 200.

*Design generation system*

The design generation system 120 includes a pre-trained, text-based, large language model (LLM) that is grounded to a multi-modal domain, enabling the model to process and generate arbitrarily interleaved other-modality data and text data. This is achieved by keeping the underlying LLM frozen (i.e., fixing pre-learned weights and certain layers of the model during training and inference so that they remain unchanged and are not updated during fine-tuning) and fine-tuning weights for newly added vocabulary and the input and output layers of the design generation system 120 to enable cross-modality interactions.

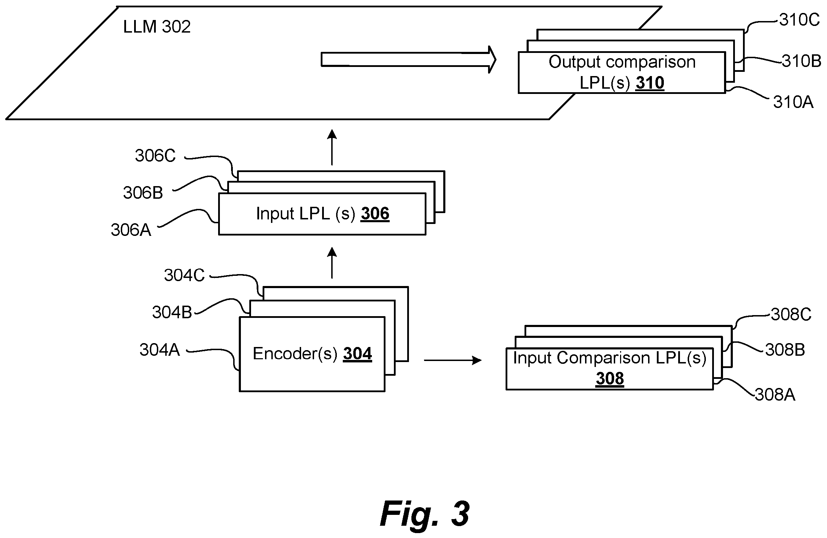

Fig. 3 illustrates an example design generation system 120. The design generation system 120 includes an LLM 302, and one or more encoders 304. The design generation system 120 also includes three projection layers per encoder 304 - an input projection layer 306, an input comparison projection layer 308, and an output comparison projection layer 310.

The LLM 302 may be any suitable large language model that is pre-trained to predict output tokens sequentially. As used herein, the term "token" refers to the basic unit of input and output that the design generation system processes during training, inference, and evaluation. For an LLM, tokens usually represent various linguistic elements such as words or sub-words that the model has been pre-trained on. In the present disclosure, as will be described in detail later, the LLM 302 is also trained to predict additional tokens that are distinct from the regular vocabulary tokens of the LLM. These additional tokens are called special tokens and structural tokens. Structural tokens provide additional information to the LLM 302 to understand the structure of the model representation data, whereas special tokens include tokens related to non-text modalities, such as numbers, media, fonts, and/or colours.

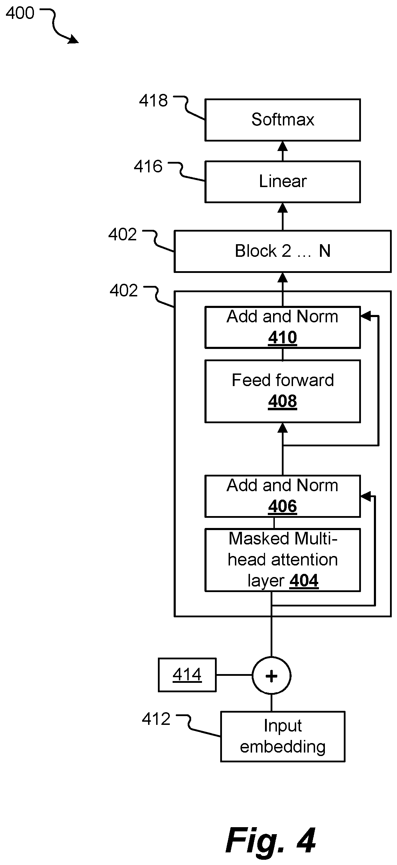

In some embodiments, the LLM 302 has a decoder-only transformer architecture as depicted in Fig. 4. In other embodiments, the LLM 302 may have any other architecture, such as an encoder-decoder transformer architecture, a recurrent neural network architecture, a convolutional neural network architecture, without departing from the scope of the present disclosure.

The encoders 304 may be trained machine learning models (such as neural networks) that are configured to process input data and extract meaningful representations from the input. These representations are referred to as vector embeddings, which capture various patterns and characteristics present in the input.

Each encoder 304 converts discrete inputs, such as media, text, colours, and fonts, into vector representations in a corresponding high-dimensional space. In some examples, a single encoder 304 may be utilized to generate vector embeddings for any non-text input. In other examples (e.g., the example depicted in Fig. 3), separate encoders 304 may be utilized to analyse different types of non-text inputs and generate vector embeddings for these.

For example, a font encoder 304B, may be utilized to generate vector embeddings for any fonts present in the input, a media encoder 304A may be utilized to generate vector embeddings for any media items in the input, and a colour encoder 304C may be utilized to generate vector embedding for any colours included in the model representation data. It will be appreciated that fewer or more encoders 304 may be utilized without departing from the scope of the present disclosure depending on the modalities supported by the design generation system. For instance, in some examples, each type of media item - images, vector graphics, videos, and audio - may have its own separate encoders and other encoders may be utilized to generate vector embeddings for other design attributes such as bounding boxes (which will be described later).

Any appropriate architecture may be employed for the encoders 304 including, e.g., convolutional neural networks, vision transformers (ViT), residual networks, etc., without departing from the scope of the present disclosure.

Each modality may have its own embedding space. For example, as the LLM is a text-based model, it has its own text embedding space. Similarly, each of the encoders handle a particular modality and have their own embedding spaces, such as media embedding space, font embedding space, or colour embedding space. To enable the design generation system to understand the relationships between these various modalities, a technique is required to map these embedding spaces.

The projection layers 306-310 are configured to do this. Each projection layer 306-310 includes one or more neural network layers and performs a linear transformation on its input data. It includes a set of weights that can be learned during the training process described later. The input projection layer 306 projects or maps the input embeddings generated by a corresponding encoder 304 into the same embedding space as that accepted by the LLM 302 (e.g., the text embedding space). For example, the input projection layer 306 associated with a media encoder 304A may project or map the embeddings of images and videos from the media embedding space into the text embedding space of the LLM 302 and an input projection layer 306 associated with a font encoder 304B may project or map the embeddings of font families from the font embedding space into the text embedding space.

The input comparison projection layer 308 associated with each encoder 304 projects the vector embeddings generated by its corresponding encoder into a common comparison space. A common comparison space is a shared embedding space where representations from different modalities (such as text, media, fonts, colours, etc.) are mapped to. This shared common space enables direct comparisons and interactions between the various modalities, allowing the design generation system 120 to understand the relationships between these modalities. In one example, the common space has 256 dimensions.

The output comparison projection layer 310 associated with each encoder 304 projects the vector embeddings of any special tokens generated by the LLM 302 to the common comparison space.

By including specialised projection layers 306-310 for each encoder, the burden of the design generation system 120 may be reduced as each projection layer only needs to learn how to map embeddings from one space into another. However, it will be appreciated that in other embodiments, a single input projection layer 306 may be utilized for projecting embeddings from the various encoders 304 to the text embedding space. Similarly, a single input comparison projection layer 308 may be utilized for projecting embedding from the various encoders 304 to the common embedding space and a single output comparison projection layer 310 may be used for projecting embeddings from the LLM 302 to the common embedding space.

Fig. 4 illustrates an example decoder-only transformer architecture 400 that can be used as the LLM 302.

The input to the transformer 400 is a prompt fed into the transformer as a whole. The output of the transformer is the model representation data that is output one token at a time. The transformer architecture 400 includes a plurality of decoder blocks 402.

Each decoder block 402 includes a masked multi-head attention layer 404 including multiple 'heads'. Each head has its own weights and lets the model 302 focus on different parts of the input when generating each token. Each head of the attention layer 404 transforms the input embeddings into queries, keys, and values to compute attention scores between pairs of tokens in the input data. The attention scores indicate the importance of each token relative to others in the input data. The attention scores may be utilized by these layers 404 to compute weighted sums of the values, resulting in contextualized representations for each token in the input data. The output from each head is concatenated and passed through a linear layer. The multi-head attention layer is a masked layer, in that the decoder can only see the first part of the input, which was already translated. This prevents later positions from attending to subsequent positions such that each token in a sequence is not influenced by future tokens.

Each decoder block 402 also includes a feedforward neural network layer 408 that learns complex interactions and features from the representations generated by the self-attention layers 404. The self-attention 404 and feedforward neural network layers 408 are followed by residual connection and normalization layers 406, 410 that add the output of each layer to the input of that layer, allowing gradients to flow directly through the transformer 400 during training and normalize the outputs of that layer to stabilize training and improve convergence. The output of the final decoder block 402 is a set of vectors, each representing the input sequence with a rich contextual understanding.

In addition, the transformer architecture 400 includes an embedding layer 412 before the first decoder 402. The embedding layer 412 converts textual/numerical input data into vector embeddings. Data that is already in the form of vector embeddings (e.g., embeddings generated by encoders 304) remain unchanged.

The transformer architecture 400 also includes a positional encoder 414 that provides information about the position of each token in the input. In natural language processing, the order of words in a sentence is usually important for determining the sentence's meaning. However, traditional machine learning models, such as neural networks, do not inherently understand the order of inputs. To address this challenge, positional encoding can be used to encode the position of each word in the input sequence as a set of numbers. By incorporating positional encoding into the transformer architecture 400, the LLM 302 can more effectively understand the order of words in a sentence and generate grammatically and semantically correct outputs. This positional information is combined with the vector embeddings from the embedding layer 412 before it is provided to the first decoder block 402. The transformer architecture 400 further includes an output layer that is passed through a linear transformation 416 followed by a softmax function 418.

It will be appreciated that the transformer architecture 400 may include additional and/or alternative layers (e.g., including pre-processing and post processing layers). Further, it will be appreciated that a transformer architecture is an example of the type of LLM that can be trained to generate designs according to embodiments of the present disclosure and that alternative deep learning model architectures such as the encoder-decoder transformer model, convolutional neural networks, etc., may be utilized in the design generation system 120 without departing from the scope of the present disclosure.

## *User interfaces*

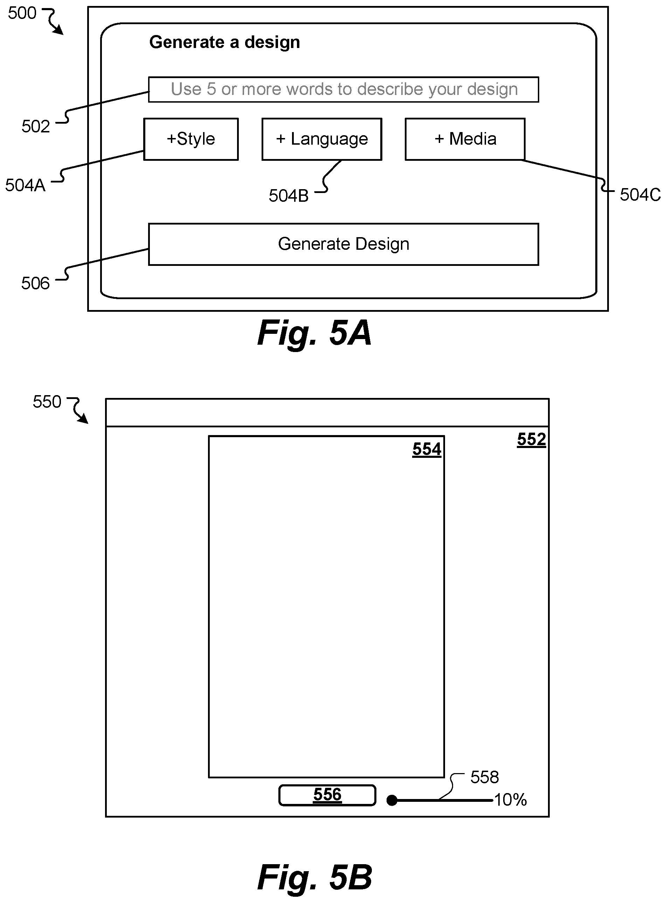

In the present disclosure, the client application 142 configures the client system 140 to provide an input user interface 500 and an editor user interface 550 (UI). Generally speaking, the input UI 500 allows users to provide inputs or prompts to generate a design. The editor UI 550 allows a user to preview, view, create, edit, and output designs. FIG. 5A provides a simplified and partial example of an input UI 500 and Fig. 5B provides a simplified and partial example of an editor UI 550. In these examples the UIs 500, 550 are graphical user interfaces (GUI).

The input UI 500 includes a prompt input region 502. The prompt input region 502 may include a text field with placeholder text, for example, of "Use 5 or more words to describe your design" or alternative text, which directs a user to input their prompt in this region 502.

The UI 500 may further include one or more interactive controls 504 to add additional inputs in relation to the input prompt. The input UI 500 depicts three example interactive controls 504A-504C that can be utilized by a user to provide additional inputs. For example, the style interactive control 504A may be selected to specify a particular style for the design (e.g., inspirational, funky, retro, etc.). The language interactive control 504B may be selected to specify a language for the design. Similarly, the media interactive control 504C may be selected to add one or more media items that the user wishes to include in the design.

It will be appreciated that any type of interactive controls may be provided to allow a user to specify these additional parameters. In some examples, the interactive controls 504 may be buttons, which when selected display a pop-up window displaying a list of values the user can select from. In other examples the interactive controls 504 may be drop-down menus or text fields. Further, it will be appreciated that the number and type of interactive controls provided in UI 500 may vary without departing from the scope of the present disclosure. For instance, in some embodiments, an interactive control for selecting a design type, and/or a delivery method may be provided instead of or in addition to the interactive controls 504A-504C.

In addition, the UI 500 includes an interactive control, e.g., "generate design" control 506. Once the user has entered an input in the prompt input region 502 and (optionally) selected one or more of the interactive controls 504, the user may select the generate design control 506. Selection of this control 506 causes method 1000 (which is described later) to be performed.

In some examples, the "generate design" control 506 may remain inactive until a threshold amount of input is provided by the user. Once the client application 142 detects that the threshold amount of input is provided, the "generate design" control 506 may be activated and may become selectable. The threshold amount of input may vary based on the implementation. In some examples, the threshold amount of input may be at least five words input in the prompt input region 502. In other examples, the threshold amount of input may be a text input in the prompt input region 502 and selection of one or more interactive controls 504. In still other examples, where text and media input are required to generate a design, the threshold amount of input may be text input in the prompt input region 502 and selection of at least one media item using control 504C.

Editor UI 550 includes a design preview area 552. Preview area 552 may, for example, be used to display a page 554 (or, in some cases multiple pages) of a design that is being created and/or edited. In this example an add page control 556 is also provided (which, if activated by a user, causes a new page to be added to the design being created) and a zoom control 558 (which a user can interact with to zoom into/out of page currently displayed).

Alternative interfaces, with alternative layouts and/or alternative tools and functions, are possible. For example, the input GUI 500 and editor GUI 550 typically include many other controls that permit designs to be created, edited (by creating/adding design elements such as images, text, videos, and/or other elements), and output (e.g. saving to local memory, a server data store such a 138, printing, publishing via social media, and/or other means) in various ways.

It will be appreciated that in UIs 300 and 350, selection of the various user input controls and text boxes can be done in various ways. For example, a user may type text directly into region 502 using a physical or virtual keyboard and/or select the one or more interactive controls using a keyboard or mouse. Alternatively, a user may enter text or select an interactive control by speaking. In such cases, words are captured by a microphone (e.g., microphone 222) and converted to text using appropriate speech-to-text software and then input into the one or more text boxes or used to select the one or more interactive controls.

*Design data*

Designs may be stored in the design generation server 110 using a native design data. This native design data (also referred to as simply design data herein) may be stored in various formats. An example design data format that will be used throughout this disclosure for illustrative purposes will now be described. Alternative design data formats (which make use of the same or alternative design attributes) are, however, possible, and the processing described herein can be adapted for alternative formats.

In the present context, design data in respect of a particular design is stored in a design record. Generally speaking, a design record defines certain design-level attributes and includes element data.

In the present example, the format of each design record is a device independent format including a set of key-value pairs (e.g. a map or dictionary). To assist with understanding, a partial example of a design record format is as follows:

| Attribute | Example |
| --- | --- |
| Design ID | "designId": "abc123" |
| Dimensions | "dimensions": {"width": 1080, "height": 1080} |

(continued)

| Attribute | Example |
|---|---|
| Design type | "type": "poster" |
| Design name | "name": "Test Doc 3" |
| Background | "background": {"mediaID": "M12345"} |
| Element data | "elements": [{element 1}, ... {element n}] |

In this example, the design-level attributes include: a design identifier (which uniquely identifies the design); page dimensions (e.g. a default page width and height); a design type (e.g. an indicator of the type of the design); a design name (e.g. a string defining a default or user specified name for the design); background (data indicating any page background that has been set, for example an asset identifier of an image that has been set as the page background, a value indicating a particular colour of a solid background fill, or data indicating an alternative background); and element data (discussed below). Additional and/or alternative design-level attributes may be provided, such as attributes regarding design owner, edit date, creation date, design version, design permissions, and/or other design-level attributes.

A design's element data is a set (in this example an array) of element records. Each element record defines an element (or a set of grouped elements) that has been added to the design. In this example, an element record's position in a design's elements array serves to identify the element and determines the depth or z-index of the element (or element group) on the page (e.g. an element at array index n is positioned above an element at array index n-1 and below an element at array index n+1). Element depth may be alternatively handled, however, for example, by storing depth as an explicit element attribute.

An element record defines an object that has been added to a design - e.g. by importing from one or more asset libraries (e.g. libraries of images, animations, videos, etc.), or by otherwise being added to a design page.

Different types of design elements may be provided for depending on the system in question. By way of example, design element types such as the following may be provided: images elements, graphic elements; video elements; audio elements; text elements; colour elements; and/or elements of other types.

As will be appreciated, different attributes may be relevant to different element types. For example, any element that holds visual media (e.g. an image, vector graphic, video, text, etc.) will typically be associated with position and size data, while such data may not be relevant to an element that holds audio media. Accordingly, different element record formats (with different attributes) may be used for different element types.

By way of example, an element record for an image type element may be as follows:

| Attribute | Note | E.g. |
|---|---|---|
| Type | A value defining the type of the element. | "type": "IMAGE" |
| Position | Data defining the position of the element: e.g. an (x, y) coordinate pair defining (for example) the top left point of the element. | "position": (100, 100) |
| Size | Data defining the size of the element: e.g. a (width, height) pair. | "size": (500, 400) |
| Rotation | Data defining any rotation of the element. | "rotation": 0 |
| Opacity | Data defining any opacity of the element (or element group). | "opacity": 1 |
| Media identifier | Data indicating the media (e.g. an image) that the element holds/is used to display | "mediaID": "M12345" |

As a further example, an element record for a text type element may be as follows:

| Key/field | Note | E.g. |
|---|---|---|
| Type | A value defining the type of the element. | "type" : "TEXT", |
| Position | Data defining the position of the element (e.g., x, y coordinate pair). | "position": (100, 100) |
| Size | Data defining the size of the element. | "size": (500, 400) |

(continued)

| Key/field | Note | E.g. |
|---|---|---|
| Rotation | Data defining any rotation of the element. | "rotation": 0 |
| Opacity | Data defining any opacity of the element. | "opacity": 1 |
| Text | Data defining the actual text characters | "text": "Happy birthday!" |
| Attributes | Data defining attributes of the text (e.g. font, font size, font style, font colour, character spacing, line spacing, justification, and/or any other relevant attributes) | "attributes": {... } |

In the present disclosure, design elements are referred to as having bounding boxes. The bounding box of a given design element is the minimum rectangular area which encloses that design element and may, for example, be considered as a set of four coordinates: (min x, max x, min y, max y). With the example element data above, a given element's bounding box may be calculated as: min x = position x coordinate; max x = position x coordinate + width; min y = position y coordinate; max y = position y coordinate + height. In another example, the bounding box of a given design can be a set of four numbers (min x, min y coordinates, width and height). The min x and y coordinates represent the top left corner of the bounding box. Using these coordinates and the width and the height, the max x and max y coordinates can be calculated.

In the present disclosure, processing is performed with respect to designs that include a single design page. To this end, and unless stated otherwise, reference to a design herein is reference to a single page of a design. The techniques described herein may, however, be adapted to be applied to multi-page designs. In case a design includes multiple pages, the design record may store page data that is a set of page records. Each page record may then store design data relevant to that page, such as a page background, and element data. In multi-page designs, the techniques described herein may be adapted by processing each page of a multi-page design separately.

### Example methods

Example methods for generating designs according to aspects of the present disclosure will now be described. The methods are segmented into three broad categories - methods for generating training data, methods for training the design generation system 120, and methods for using the trained design generation system 120 to generate designs. It will be understood that this segmentation is only done for ease of understanding of the various methods and that in actual implementation these methods may be performed in any order without departing from the scope of the present disclosure.

### Method for generating training data

As described previously, the model generation system 120 is trained to generate model representation data based on natural language prompts. Therefore, it must be trained to not only learn model representation data but also the relationship between model representation data and the natural language prompts. However, designs in the design generation server 110 may be stored as design records and natural language prompts may not be available for these designs.

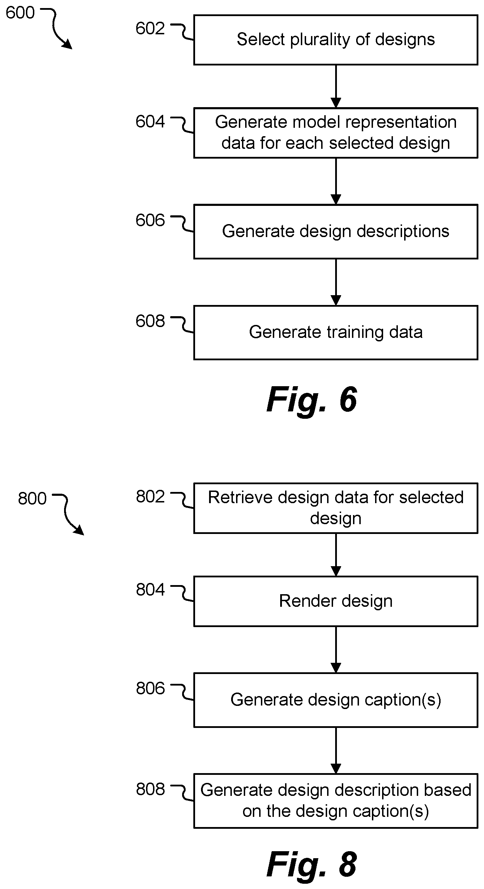

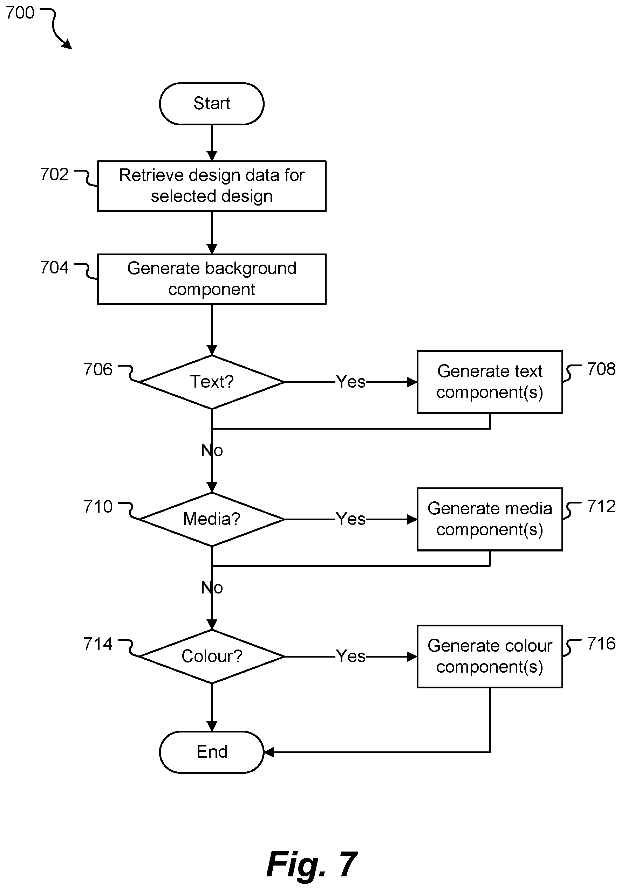

To address this, aspects of the present disclosure generate the natural language prompts (referred to as design descriptions herein) and convert design records into model representation data so that both can be provided as training data to the model generation system 120. This section describes processes for doing do. In particular, Fig. 6 describes a method 600 for generating the training data, Fig. 7 describes a method 700 for converting design data into model representation data, and Fig. 8 describes a method 800 for generating natural language design descriptions.

In the present example, these methods are described as being performed by the design application 114 and in particular the training module 116. The processing described may, however, be performed by one or more alternative applications or modules without departing from the scope of the present disclosure.

The method 600 commences at step 602, where a plurality of designs are selected. The selection of the designs may be performed in various ways. In some examples, all the design templates stored in the design data library 128 may be selected. In other examples, a subset of the design templates stored in the design data library 128 may be selected (e.g., based on one or more selection criteria such as design type). In still other examples, all designs created by users and made public may be selected. In yet other examples, designs that have a popularity score above a certain threshold may be selected. The popularity score may be determined based on the number of times the corresponding design has been viewed or used by users to create their own designs. In some other embodiments, design data for all the designs stored in the design data library 128 may be selected and in still other embodiments, a subset of the designs stored in the design data library 126 may be randomly selected. It will be appreciated that these are merely examples and that the criteria used to select design data may be based on a combination of the above and/or other relevant criteria such as design type, design category, design metadata, etc.

Further still, the number of designs selected at this step also depends on the number of training data records required to accurately train the design generation system 120. For example, if a million training data records are required to train the design generation system 120 and the data storage 126 stores 2 million records, 1 million designs may be selected (randomly or based on some selection criteria) from the data storage 126.

At step 604, model representation data is generated for each of the selected designs. As described previously, the designs are defined by design records. The design records however may not be optimal for large language models (LLMs) such as the design generation system 120 to understand and reproduce. This is because the design data 128 captures the entire complexity of a given design and even for simple designs can become very long.

To address this, aspects of the present disclosure generate model representation data records based on the design records of the designs selected at step 602. Model representation data is a simpler representation of a design, is shorter, and is still capable of capturing complex aspects like media information. As described previously, it is a semi-structured format that represents designs as a sequence of design elements and can be understood by the design generation system 120.

Generally speaking, a model representation data record generated at step 604 defines "design components" that can be handled by the design generation system 120. Each design component includes multiple tokens that indicate various attributes of the design component. In one embodiment, the design components include components for: a background of the design, any media elements included in the design, any text elements included in the design, and other media assets used in the design (such as any colours and/or fonts). It will be appreciated that in other embodiments, the model representation data may include more or fewer design components without departing from the scope of the present disclosure. For example, in some embodiments, it may include components to handle other design elements such as lines, boxes, etc.

The technique for generating model representation data with respect to one selected design record will be described with respect to method 700. It will be understood that a similar process is utilized to generate the model representation data for all the designs selected at step 602.

The method 600 then proceeds to step 606, where a design description for each of the selected designs is generated. A design description is a natural language description of the design. In one example, it may be 2-3 sentences long and may capture the essence of the goal, target audience, subject, and style of the corresponding design. The process for generating design descriptions with respect to one design will be described in method 800. It will be understood that a similar process is utilized to generate design descriptions for all the selected designs.

At step 608, training data records are generated using the model representation data and the design descriptions. The training module 116 generates a training data point or data record corresponding to each design selected at step 602. Generally speaking, each training record includes a design description (e.g., generated at step 606) and the model representation data for the corresponding design (e.g., generated at step 604). Each training data record may further include a data record identifier.

In some embodiments, the training data record may also include the design type (e.g., retrieved from the design record of the corresponding design). The design type component of the training data may help the design generation system 120 to understand and control design size and aspect ratio as certain design types may be associated with specific sizes and aspect ratios. For example, an Instagram Post type design may have a 1080 px x 1080px size (and a square aspect ratio), a landscape Facebook cover type design may have a 851px x 315px size (and a rectangular aspect ratio), a postcard type design may have a 148mm x 104mm size (and a rectangular aspect ratio), a portrait poster type design may have a 42 cm x 59.4 cm size (and rectangular aspect ratio), and other design types may have other defined sizes (and aspect ratios). By including the design type in the training data, the sizes and aspect ratios of the designs can be controller during generation as the design generation system 120 can be trained to understand and discern between different design types, their sizes and aspect ratios.

*Generating model representation data*

The training module 116 utilizes method 700 to convert native design data associated with designs into model representation data. As described previously, model representation data includes design components representing different elements of the design and each design component includes multiple tokens that indicate various attributes of the design component.

The beginning of each design component in the model representation data is denoted by an "<element-type>" indicator (which is a new structural token that is to be learnt by the LLM 302) where "element-type" is replaced with an identifier of the actual design component (e.g., background, image, video, etc.). The element indicator is followed by element specific tokens.

To generate the model representation data, the method 700 commences at step 702, where the training module 116 retrieves the design data for a selected design. This may include retrieving the design record and any element records associated with the selected design. In some embodiments, the training module 116 may have a set of design identifiers of the selected designs and it may select the design identifier of an unprocessed design from the set and query the data storage 126 for the design data corresponding to the design identifiers.

Once the training module 116 obtains the design record for the selected unprocessed design, the method proceeds to step 704, where the training module 116 inspects the design data to identify the background of the design. In the present example, this may be done by inspecting the background attribute in the design record.

In one example, the background attribute for the selected design record may be {"mediaID": "M12345"}. In this example, the training module 116 determines that the background of the design is an image. Accordingly, it generates a background image component of the model representation data. The background component starts with the element indicator structural token "<bkg-image>" and is followed by one or more further tokens that describe the background image of the design. In some embodiments, the image is represented as "[IMG: vector embedding]", which is a special token to be learnt by the LLM 302. This special token indicates that it is for an image and acts as a placeholder for a vector embedding of the background image M12345. The background component in this example would be "<bkg-img> [IMG: vector embedding]." Generation of a vector embedding corresponding to an image is described below.

Alternatively, if the background attribute of the selected design indicates that the background is a colour (e.g., white, red, etc.), the training module 116 generates a background component that starts with the element indicator structural token "<bkg-colour>" and includes a further token that describes the colour of the background of the design. In some embodiments, the colour is represented by a special token, e.g., "[COLOUR: vector embedding]". This special token indicates that it is for a colour and acts as a placeholder for a vector embedding of the background colour. The background component in this example would be - "<bkg-colour> [COLOUR: vector embedding]". Generation of a vector embedding corresponding to a colour is described below.

Other types of backgrounds may be handled in similar ways. For example, if a background attribute indicates a colour gradient, a video, or an alternative fill, the background component may include a structural token that indicates the type of background along with one or more special tokens that describe the actual background (e.g. the colour gradient, video, or alternative fill).

The method then proceeds to step 706, where the training module 116 determines whether the design includes any text elements. To this end, the training module 116 may inspect the element records in the design record and in particular the "type" attribute in the element records. If it identifies any element records that include the type "TEXT", the method proceeds to step 708, where the training module 116 generates a text component for each TEXT element record in the design record.

A text component includes tokens representing a bounding box defined by the element text, tokens for the text defined by the text element, and tokens representing one or more parameters of the text (e.g. formatting, alignment, etc.). A generated text component may start with the element indicator structural token such as "<text>" and then include additional tokens that describe the text content, the position, size, and text formatting of the text element. The training module 116 may retrieve the text content from the text field in the text element record. The text component further includes another structural token that indicates text parameters, such as "[txtparams]" and this is followed by tokens representing certain attributes of the text such as the colour of the text and the height of the font. In some embodiments, the text colour is presented by a special token, such as the "[COLOUR: vector embedding]" token, which includes a vector embedding of the colour of the text and the text height is represented as a number. The training module 116 may retrieve the text colour and the text height from the "attributes" field in the corresponding text element record.

Following the text parameters, the text component includes six tokens that represent the bounding box coordinates of the text box and other positional attributes of the text element in the corresponding design. The bounding box may be represented by four tokens in the text component. The first two tokens may represent the x and y coordinates of the top left corner (and may be obtained from the position x coordinate in the POSITION field of the text element record), and the next two tokens may represent the width of the bounding box and its height respectively (these may be obtained from the SIZE field in the text element record). The fifth token represents the rotation of the bounding box in degrees (and can be obtained from the ROTATION field in the text element record) and the last token represents the z-index (layer) of the text element. The z-index may be determined based on the order in which that element record is included in the design record's element data. In some embodiments, the last token may represent the opacity of the text element instead and the opacity may be obtained from the OPACITY field in the text element record. In some other embodiments, the text component may include seven tokens such that both z-index and opacity information can be included in the text component.

The text component may also include a special token that indicates the font of the text. The training module 116 may retrieve the font information from the attributes field in the corresponding text element record. In some embodiments, the font may be represented by the special token "[FONT]", which is a placeholder for an embedding of the font family of the text element. Generation of a vector embedding corresponding to a font is described below.

In one example, the text component generated at this step for the example text element record shown in the example text element record above may be -

<text> Happy birthday! [txtparams] [COLOUR: vector embedding] 6 [] 100 100 500 400 0 1 [FONT: vector embedding]

In this example, the text component includes the structural token <text> followed by the text "Happy birthday!", followed by the structural token [txtparams], and followed by the special token representing the embedding of the font colour and the text height (6pt). The font height is followed by the bounding box coordinates (after the structural token "[]"), including x,y coordinates of the bounding box's top left corner, which are 100 and 100, the width of the bounding box, which is 500, its height, which is 400, its rotation information (which is 0 degrees), and its z-index information (which in this example is 1). The text element ends with the special token that includes the embedding of the text font.

It will be appreciated that the order of the various sub-components that make up a text component may be altered and one or more sub-components may be removed or added without departing from the scope of the present disclosure.

If the design record includes multiple text element records, the training module 116 generates multiple text components at this step. Once text components for all the text element records in the selected design record have been generated, the method proceeds to step 710.

At step 710, the training module 116 determines whether the design record includes any media elements, such as images, video, vector graphics, audio. To this end, the training module 116 may inspect the element records in the design record and in particular the "type" field in the element records. If it identifies any element records that include the type of GRAPHIC, IMAGE, VIDEO, or AUDIO, the method proceeds to step 712, where the training module 116 generates a media component for each media element record in the design record.

In case the media element is GRAPHIC, IMAGE, or VIDEO, the generated media component may start with a corresponding element indicator structural token such as "<svg>", "<image>" or "<video>", respectively. The media component further includes tokens representing its bounding box coordinates and a special token, e.g., "[MEDIA: vector embedding]" that includes special characters that indicate that it is a special token, e.g., IMG, VIDEO, or AUDIO, and a placeholder for the vector embedding of the media item. The generation of a vector embeddings corresponding to different types of media items is described below.

The bounding box coordinates and positional information are similar to those used for the text component and may include six or seven tokens.

An example of the media component generated at this step for an IMAGE media element may be -

127 0 124 57 0 3 [IMG: vector embedding]

In this example, the image component starts with the structural token for images followed by the bounding box coordinates - the x,y coordinates of the bounding box's top left corner are 127, 0, the width of the bounding box is 124, its height is 57, it is rotated by 0 degrees, and its z-index value is 3.

It will be appreciated that the order of the various sub-components of the media component may be altered, and one or more sub-components may be removed or added without departing from the scope of the present disclosure. For example, in case the media item is a video, the media component may include further tokens that describe, for example, a duration of the video, a start time of the video, and/or any trim points for the video.

In case the media element is an audio, the generated audio component may start with a corresponding indicator such as "<audio>" and include a special token associated with the audio element. In some embodiments, the audio special token is represented as "[AUDIO: vector embedding]", which includes a placeholder for an embedding of the audio element. Generation of a vector embedding corresponding to an audio item is described below. An example of the media component when the media item is an audio may be -

<audio> [AUDIO: vector embedding]

It will be appreciated that in some embodiments, the audio media component may include additional sub-components. For example, it may include further tokens that describe, for example, a start time of the audio and a duration of the audio element.

If the design record includes multiple media element records, the training module 116 generates multiple media components at this step. Once media components for all the media element records in the selected design record have been generated, the method proceeds to step 714.

At step 714, the training module 116 determines whether the design record includes any colour elements, e.g., colour boxes. To this end, the training module 116 may inspect the element records in the design record and in particular the "type" attribute in the element records. If it identifies any element records that include the type COLOUR, the method proceeds to step 716, where the training module 116 generates a colour component for each colour element record in the design record.

The colour component may represent a colour box represented in the corresponding design. The generated colour component can start with the structural token indicator <colour> and can be followed by a special token, e.g., "[COLOUR: vector embedding] that indicates it is a colour token and includes the colour embedding. The special token may be followed by a structural token indicating the beginning of a bounding box "[]" and then include the bounding box and positional tokens (same as in the text and media elements).

An example of a colour component generated by the training module 116 at step 716 may be -

<colour> [COLOUR: vector embedding] [] 40 168 177 16 0 1

If the design record includes multiple colour element records, the training module 116 generates multiple colour components at this step. Once colour components for all the colour element records in the selected design record have been generated, the method proceeds ends.

It will be appreciated that although method steps 706, 710, and 714 are shown in one particular order in method 700, the order of these steps can be altered without departing from the scope of the present disclosure.

To assist with understanding, the table below includes an example of a model representation data record for an example design that is generated based on the design record for the design in method 700.

| Attribute | Example |
| --- | --- |
| Design ID | "designId": "abc123" |
| Design type | "type": "Instagram poster" |
| Design name | "name": "Test Doc 3" |
| Model representation data | <bkg-colour> [COLOUR: vector embedding] <image> -48 -10 161 124 0 0 [IMG: vector embedding] <text> Don't talk, just act. Don't say, just show. Don't promise, just prove. [txtparams] [COLOUR: vector embedding] []52 91 151 97 0 8 [FONT: vector embedding] |

In this example, the design-level attributes include: a design identifier (which uniquely identifies the design); a design type (e.g. an indicator of the type of the design); a design name (e.g. a string defining a default or user specified name for the design); and the model representation data. The design identifier, design type and design name can be retrieved directly from the design record. Additional and/or alternative design-level attributes may be provided, such as attributes regarding design owner, edit date, creation date, design version, design permissions, and/or other design-level attributes.

The model representation data in this example record includes three design components: a background colour, an image component, and a text component.

In the model representation data, several of the design assets are represented by special tokens that are placeholders for their vector embeddings. For example, any media elements, such as images, videos, and audio are represented by their vector embeddings. Similarly, any colours and fonts are also represented by their vector embeddings.

As described previously, the LLM 302 includes an embedding layer 412 that generates dictionaries of finite tokens that enable the LLM 302 to represent arbitrary text. These tokens are represented in the LLM 302 as weights and are referred to as vector embeddings. The pre-existing embedding layer 412 in the LLM 302 can accurately represent any plain text or numbers in the model representation data as vector embeddings. However, as the embedding layer 412 in the design generation system 120 is not trained to embed non-natural language, it is unable to accurately generate vector embeddings for any special tokens in the model representation data.

In steps 704, 708, 712 and 716, when the training module 116 is generating the background, text, media, and/or colour components, respectively, it may generate vector embeddings for the corresponding background colour/image, font, colour, and/or media item. The mechanism for embedding these design assets will be described in the following section.

To generate an embedding for a media item, at step 712, the training module 116 retrieves the target media items in any media elements identified at step 710 (e.g., from media library 134) and feeds these target media items to the media encoder 304A. It then adds the vector embeddings generated by the media encoder 304A in the vector embedding placeholders of the corresponding special tokens [IMG], [VIDEO] [COLOUR] and/or [AUDIO].

Before feeding the media elements to the media encoder 304A, the training module 116 may normalize the media items to preset values. This typically depends on the type of media encoder utilized and the requirements of the selected media encoder. For example, if a CLiP encoder is utilized, vector graphics may first be rasterized and then resized to a preset size, and images may also be resized to a preset size (e.g., 224X224). Similarly, the resolution of videos may be converted to a preset resolution (e.g., 720p), and the resolution of audio files can be converted to a preset bit depth and/or sampling frequency (e.g., 24-bit/96 kHz) depending on the corresponding encoder requirements.

The type of media encoder 304A utilized may depend on the type of media item. For images, an image encoder may be utilized that transforms images and graphics into vector embeddings. Typically, an image embedding is a vector representation of an image in which images with similar motifs, colours, shapes, etc., may have similar vector profiles. Generally speaking, each number in the embedding represents information of the image and the more numbers in an embedding, the more the information about the image encoded into the embedding. In one example, each image vector embedding may include 512 numbers. In other examples, fewer or more numbers may be included in the embedding. Image encoders of pre-trained neural networks such as contrastive language-image pretraining (CLIP), residual networks (RES-Net), vision transformer (ViT) or any other ML model capable of converting images to vector embeddings may be utilized to obtain the image embeddings.

Similarly, for video type media items, a video encoder may be utilized that performs the task of identifying what a video represents. The video encoder may convert the video into a series of frames or images and feed these to a video classification model. The video classification model may be configured to analyse each image or frame in the video to determine the content of the image/frame and analyse the spatio-temporal relationship between adjacent frames to recognize the actions in a video (e.g., rising sun, setting sun, person doing pushups, etc.). In one example, the video classification model generates embeddings for videos that represent the actions being performed in the video along with the objects displayed in the video.

For audio media items, an audio encoder may be utilized that is configured to identify and classify what the audio represents. For example, the audio encoder may be configured to determine whether the audio is a song (and which song), is a noise (such as rain, clapping, birds chirping), or some other type of sound. The model may take audio waveforms as input and make predictions as to what the audio represents. In one example, the audio encoder may also generate an embedding for the audio item that represents what the audio item is. An example audio encoder may be VGGish, a deep learning model developed by Google® for audio feature extraction.

In any case, the media encoder(s) 304A that are utilized to analyse the media items and generate the corresponding embeddings are trained such that they can represent a sufficient amount of relevant information about the media item in the embedding. For instance, the image encoder may be trained by feeding an appropriate number (hundreds of thousands if not millions) of labelled images (i.e., images and their textual description). The textual descriptions may be embedded into numerical representations using techniques such as word embeddings. The images may be preprocessed by dividing them into smaller patches or tiles. Each patch is then passed through a convolutional neural network of the embedding model to extract visual features. Both the textual embeddings and the visual features extracted from the images may be projected into a shared embedding space. The embedding model is trained using contrastive learning - embeddings of matching image-text pairs are encouraged to be closer together in the embedding space, while embeddings of non-matching pairs are pushed further apart. This encourages the model to learn embeddings that capture sematic similarities between images and their associated text.

The video and audio embedding models can be similarly trained by providing them with a large number of labelled video and audio files, respectively. Training of embedding models is known in the art and is not described in more detail here.

Once the media item embeddings are generated, the training module 116 replaces the corresponding placeholders in the special tokens [IMG], [VIDEO], or [AUDIO] with the generated media embeddings.

To generate an embedding for a colour (e.g., if a colour is detected in steps 704, 708, or 716), the training module 116 retrieves the target colour (e.g., from the colour library 138) and, in some embodiments, quantizes the colour. For example, the system may support a predetermined number of colours (e.g., 10,000 colours). Each retrieved colour is then quantized by converting it to the closest colour from the predetermined quantized colours. The colours (quantized in some embodiments or not in other embodiments) are fed to the colour encoder 304C. Before doing so, the training module 116 may generate a colour patch (e.g., an image of this colour). The colour patch may have a preset size (e.g., similar to the size of the patches the embedder divides an image into).

In one example, the image encoder may be utilized for generating embeddings for colours as well. In this case, the image encoder transforms the colour patch into an embedding in the vector space, such that similar colour patches may have similar vector profiles and dissimilar colour patches may have dissimilar vector profiles. Image encoders of pre-trained neural networks such as contrastive language-image pre-training (CLIP), residual networks (RES-Net), vision transformer (ViT) or any other ML model capable of converting images to vector embeddings may be utilized to obtain the colour embeddings. In one example, the CLiP-ViT-Patch-14 encoder may be utilized.

To train the colour encoder 304C to accurately generate embeddings for colours, the encoder may be pre-trained in a similar manner as the image encoder. That is, the encoder may be trained by feeding an appropriate number (e.g., thousands) of labelled colour patches (i.e., colour patches and their textual description). The colour encoder 304C is then trained to estimate the embedding of a colour patch based on the embedding of the textual description. During the training process, a colour patch is fed to the model and based on the weights of the various layers of the encoder 304C, an embedding is generated. If the output is incorrect (i.e., it does not correspond to the label/description of the colour patch), the encoder changes the weights of one or more of its layers to be more likely to produce the correct output. This process is repeated numerous times with multiple colour images, until the embedder can correctly determine the vector embedding of a colour patch most of the times. It will be appreciated that the more the process is repeated, the more accurate the encoder becomes at generating colour embeddings.

In some embodiments, to reduce the number of colours that are embedded, the colour space is discretised. For example, the colour space may be discretised into 10,000 discrete colours and the encoder may be trained to generate embeddings for these 10,000 colours.

By converting colours into colour patches and generating embeddings in this manner, the design generation system 120 can perceive how colours look and it can generate a better understanding of visual colour perception with respect to a colour's name that is mentioned in the design description.

Once the colour embeddings are generated, the training module 116 replaces the placeholders in the corresponding [COLOUR] special tokens in the background, text, or colour components with the generated colour embeddings.

To generate an embedding for a font (e.g., at step 710), the training module 116 retrieves the target font (e.g., from the font library 126) and feeds it to the font encoder 304B of the design generation system 120. Before doing so, the training module 116 may render a text sample image using the font. For example, it may generate a standard sentence or paragraph (e.g., the brown fox is jumping over the fence) and render it into a raster image. The font raster image may have a preset size.

The font encoder 304B transforms the font image into an embedding in the vector space, such that similar font images may have similar vector profiles and dissimilar font images may have dissimilar vector profiles. Image encoders of pre-trained neural networks such as contrastive language-image pre-training (CLIP), residual networks (RES-Net), vision transformer (ViT) or any other ML model capable of converting images to vector embeddings may be utilized to obtain the font embeddings. In one example, the CLiP-ViT-Patch-14 encoder may be utilized.

To train the font encoder 304B to accurately generate embeddings for fonts, the encoder 304B may be pre-trained such that they can represent a sufficient amount of relevant information about the font in the embedding. For instance, the encoder may be trained by feeding an appropriate amount (e.g., thousands) of labelled font images (i.e., font images and their font names). The image encoder is then trained to estimate the embedding of a font image. During the training process, a font image is fed to the model and based on the weights of the various layers of the encoder, an embedding is generated. If the output is incorrect (i.e., it does not correspond to the label/description of the font image), the encoder 304B changes the weights of one or more of its layers to be more likely to produce the correct output. This process is repeated numerous times with multiple font images, until the encoder 304B can correctly determine the vector embedding of a font most of the times. It will be appreciated that the more the process is repeated, the more accurate the encoder becomes at generating font embeddings.

Once the font embeddings are generated, the training module 116 replaces the placeholder in the [FONT] special tokens in the text component with the generated font embeddings.

In principle numbers, such as the bounding box and positional numbers in the model representation data can be represented by the dictionary of the LLM 302, as it is pretrained to understand text and numbers. However, some LLMs may have problems with handling numeric values -e.g., they may not be able to understand relationships between numbers and may separate a number into individual components.

Accordingly, in some embodiments, the numbers in various design components may be quantized. In one example, a predetermined design size may be selected as a training design size (e.g., 256px x 256px) and the bounding box coordinates may be quantized into predetermined N x N bins (e.g., 256 x 256). N special tokens (e.g., -256 to 256) are also created that represent these positions. The bounding box coordinates of the various design types may then be translated from their original x,y coordinates to x,y coordinates for the training design size. For example, the bounding box coordinates for a design that has a 1080 px x 1080px size are translated into bounding box coordinates for the training design size (e.g., 256 x 256). Similarly, the bounding box coordinates for a design that has a landscape size such as 851px x 315px are translated into bounding box coordinates for the training design size (e.g., 256 x 256).

N special tokens (e.g., -256, 2000) may also be created to represent other numbers (e.g., font size, rotation, height, width, z-index, etc.) in the model representation data. These numbers may be preceded by a special token (e.g., "!") and are learned by the LLM 302 during training.

In one example, the design generation server 110 also generates vector embeddings for all the design assets stored in libraries 124, 126 and 128 and maintains an index of the embeddings. This may be optionally done to reduce the amount of time needed to identify matching design assets during method 1300 (described later). Generally speaking, the vector embeddings for each design asset can be searched for K nearest neighbours using an exhaustive search - where a target embedding received from the design generation system 120 is compared with the embeddings of corresponding design assets, or by grid trick - where the embedding space is divided into grids. Both of these search techniques may be feasible if the size of the design asset embeddings is small as the query time for the first approach is linear and depends on the size of the dataset and for the second approach is exponential.

If the design asset library is large and the embeddings have high dimensionality (e.g., in the case of media library 134), both these techniques can become impractical and can result in high memory consumption and/or high latency.

To perform searches faster in such large libraries, the embeddings can be encoded to construct an index for searches. Different indexing techniques may be utilized, such as approximate nearest neighbour trees, location-sensitive hashing, and quantization. When an approximate nearest neighbour tree-based indexing technique is utilized, the vector embeddings of the media assets are split into many subsets, and a tree can be constructed using the many subsets. In particular, the vector space can be recursively split into subsets (each split representing a branch of a tree) until at most K embeddings are left in any subset.

In some other examples, instead of generating a single tree, multiple trees (also referred to as a forest) may be constructed, where each tree is constructed by using a random set of recursive splits. All the trees in the forest can be searched at the same time. Then the union of the results obtained from each tree can represent the approximate nearest neighbour embeddings to a given embedding in a very short span of time. As compared to the single tree approach, the forest approach improves the accuracy of search results. In one particular example, a Python nearest neighbour descent (PyNNDescent) library may be used for approximate nearest neighbour indexing.

If locality-sensitive hashing (LSH) is used to create the index, all the embeddings in an asset library are hashed using special locality-sensitive hash functions, such that "similar" embeddings are much more likely to collide or hash to the same bucket than dissimilar descriptors.

It will be appreciated that these are three examples of the way in which the embeddings can be indexed for faster retrieval. Many other indexing techniques are available, and any such technique can be utilized without departing from the scope of the present disclosure. Further, the system may be configured to generate different indexes for different design asset libraries. This may further increase the query speed to retrieve similar embeddings but may utilize more memory than a single index.

Turning to FIG. 8, a method 800 for generating design descriptions for the training data will be described. The method 800 commences at step 802, where the training module 116 retrieves the design data for a selected design. In some embodiments, the training module 116 may have a list of design identifiers of the selected designs and it may select the design identifier of an unprocessed design from the list and query the data storage 126 for the design data corresponding to the design identifier.

Once the training module 116 obtains the design data for the selected unprocessed design, the method proceeds to step 804, where the training module 116 generates (or retrieves) an image version of the design. In some instances, the image version of the design may already exist and can be retrieved. In other embodiments, the training module 116 may generate (or cause another application or module) to generate the image version of the design. Generally speaking, this involves rendering the design normally (e.g. based on the design-level data and the design's elements) and then rasterising the rendered design to generate the image version thereof (e.g. a JPEG or other raster format version of the design).

In some embodiments, if the design includes any text elements, these are included in the image version of the design. In other embodiments, if the design includes any text elements, the training module 116 omits these text elements in the image version of the design. In some embodiments, if a design includes one or more text elements, two image versions of the design are generated (or retrieved) at 804: a text-included image version (which includes text elements) and a text-excluded image version (which does not include text elements).

The method then proceeds to step 806, where a caption is generated for the image version(s) of the design. In some embodiments, generating the caption may include processing the image version(s) of the design to generate a semantic (or other) text description thereof. Processing the image version(s) of the design to generate the caption may be performed in any appropriate way, for instance by a machine learning model or an alternative processing technique. For example, the image version(s) of the design (with and/or without text elements) may be processed to generate corresponding caption(s) by a machine learning model such as BLIP-2, an alternative machine learning model, or an alternative processing technique. In still other embodiments, the caption may be generated manually.

In some embodiments, the method may generate two captions at this stage - one based on the text-included image version of the design, and one based on the text-excluded image version of the design.

Thereafter, the method proceeds to step 808, where a design description is generated based on the one or more captions generated at step 806. In some embodiments, the training module 116 utilizes the input generation model 122 to generate the design description. In case the training module 116 utilizes the input generation model 122, it may first generate a design description prompt, which is subsequently provided to the input generation model 122.

The content of the design description prompt will depend on the type of input generation model 122 being used. If the input generation model 122 is a general purpose LLM, the design description prompt includes the one or more captions generated at step 808, one or more attributes from the design data associated with the selected design (e.g., the title of the design, keywords, and/or text elements of the design), and configuration data.

The configuration data provides instructions to the input generation model 122 to generate the design description. In case the input generation model 122 includes a specific ML model that has already been trained for the specific task of generating design descriptions, the design description prompt may only include the one or more captions generated at step 808 and one or more attributes from the design data associated with the selected design.

The precise format of the configuration data depends on a variety of factors, including the type of LLM (e.g., configuration data for use with OpenAI's ChatGPT may differ from the configuration data required for Google's Bard), the training mechanism of the input generation model 122, and the content of the captions (and/or other available data).

In one example, the configuration data for the design description prompt may include a brief description of the task (e.g., to generate a description of the design based on the one or more captions), parameters for the task (e.g., output format, number of sentences, rules, etc.), and one or more training examples of design captions and the design descriptions the input generation model 122 is expected to generate based on those examples of design captions. The table below shows examples of configuration data that can be used.

| Description of task: | *Provide a brief description of the design based on the CAPTION(S).* |
|---|---|
| Parameters: | "*If text should appear in the design, please enclose it in double quotes*"<br>*The description should capture the essence of the type, goal, target audience, subject, and style.*<br>*Do not include phrases like "I want to create".* |
| Examples: | *Captions: "40% off super sale gaming laptop on black Friday, cyber Monday, xmas eve, new year's eve" and "a close up of a keyboard with a red key on it and a yellow arrow pointing to the right side of the keyboard"*<br>*Expected design description:*<br>*Your Story The Dark Laptop Promo Your Story template is a minimalist, technology-focused design featuring a 40% off super sale on a gaming laptop. With a dark background and a close-up of a keyboard with a red key and yellow arrow, this template is perfect for promoting discounts on electronic devices and gadgets during special events like Black Friday and Cyber Monday.*<br>*Captions: "an orange and white cat is peeking out from behind a door, with the words international cat day, 8 august" AND "an orange and white cat peeking out from behind the corner of a door with a paw print on the wall next to it"*<br>*Expected design description: Facebook Cover This simple black and white Facebook cover design features an orange and white cat peeking out from behind a door, celebrating International Cat Day on 8thAugust 2022. The design is minimalistic, with a paw print on the wall next to the cat, making it perfect for cat lovers and International Cat Day enthusiasts.* |

It will be appreciated that instead of the three components displayed in the table above, the configuration data may include many alternative components, and that many alternative approaches to generating a design generation prompt are possible. For example, the configuration data may be (or include) a single pre-assembled prompt - e.g. a string that includes the relevant components. Alternatively, separate prompts may be generated including separate components and combinations thereof. The input generation model 122 can thus be configured by providing the configuration data as a prompt, part of a prompt, or series of prompts.

In some embodiments, the same configuration data may be used to configure the input generation model 122 to generate the design description every time. In such cases, the configuration data may be predefined and stored in data storage 126 (e.g., in the training data library 130).

During step 808, the training module 116 retrieves the configuration data from the data storage 126 and combines the configuration data with the design caption(s) and other design data (if required) to generate the design description prompt. In one embodiment, the training module 116 generates the design description prompt by constructing a text string from one or more component parts of the configuration data and the design caption(s) and other design data (if required).

Once the design description prompt is generated, the training module 116 communicates the design description prompt to the input generation model 122.

By way of the configuration data, the input generation model 122 is cued to generate a design description based, in part, on the design caption(s) and/or other design data (if provided). Based on the example configuration data shown in the table above, the input generation model 122 is cued to generate a design description. The design description may be a string of text characters, which describe the design, e.g., in 2-3 sentences that capture the essence of the type, goal, target audience, subject, and style of the design.

Once the design description is generated and received by the training module 116, the method 800 ends. It will be appreciated that although method 800 describes that one or more design captions are generated by a visual-language machine learning model (such as BLIP2), this need not be required in all implementations. In some alternate implementations, each design may include metadata that describes the design. In case this metadata is available, the metadata may be utilized to generate the design description and method steps 804 and 806 may not be required. Instead, the metadata may be retrieved from the design data of the selected design and added to the design description prompt.

It will be appreciated that in method 800, it is presumed that the configuration data is provided to the input generation model 122 each time a new design generation prompt is required. However, this need not be the case in all implementations. In other implementations, the configuration data may be provided to the input generation model 122 each time an instance of the input generation model 122 is invoked. If the same input generation model 122 instance is then used for subsequent design generation prompt requests, the configuration data need not be submitted to the input generation model 122 instance again as the input generation model 122 can remember the configuration data it has been provided previously and utilize that configuration data for subsequent design generation prompt requests. Once the input generation model 122 instance is closed or exited, it may flush the configuration data and the design application 114 may need to resend the configuration data along with a design generation prompt request when a new instance of the input generation model 122 is invoked.

Further still, in method 800, it is presumed that the input generation model 122 is a general purpose LLM that has not previously been trained or configured to provide design generation prompts in the required manner. However, this need not be the case in all implementations. In some implementations, a specific purpose ML system may be adopted that has been trained using copious amounts of training data of inputs and desired output design descriptions. In such cases, there is no need to provide additional configuration data for such specifically trained input generation models and the design generation prompt may simply include the design captions and/or design attributes.

Also, in method 800, it is assumed that the input generation model 122 is a general purpose LLM that does not have visual capabilities. In other embodiments, the input generation model 122 may have visual capabilities - i.e., it may be able to understand visual content in the images. In such embodiments, method step 806 may not be required. Instead, the images may be directly fed to the input generation model 122 at step 808 where it directly generates the design description(s) from the one or more images.

At step 608 (in method 600), once the model representation data and the design description is created, a training data record is generated. The format of each training data record may be a device independent format including a set of key-value pairs. To assist with understanding, a partial example of a training data record generated by processes 600-800 is as follows:

| Key/field | Example |
|---|---|
| Training data record ID | ID: "abc123", |
| Design type | Instagram post |
| Design description | This Instagram post template features a modern and eye-catching design with a sky blue background. The main focus is a "thank you" message, surrounded by colourful paper cut-outs arranged in a heart shape. This template is perfect for expressing gratitude and appreciation on social media platforms. |
| Model representation data | <bkg-image> [IMG: vector embedding] <text> thank you! [txtparams] [COLOUR: vector embedding] 43 [] ! 71 !107 !114 !88 !-13 !0 [FONT: vector embedding] |

In another example, the training data record is not stored as a key-value pair, but as a single sequence having the following format - "Type:" + Design type + "Description:" + design description + [GEN] + Model representation data [EOS]

In this example, the [GEN] and [EOS] terms are special tokens that are to be learnt by the design generation system during training. The [GEN] token indicates the end of the input prompt and prompts the design generation system 120 to commencing generating tokens for the model representation data. The [EOS] token represents the end of sequence. This token is always the last token of a training data record and teaches the design generation system 120 to stop generating tokens for the model representation data.

An example of a training data record in this format is as follows -

> Type: Instagram post. Description: This Instagram post template features a modern and eye-catching design with a sky-blue background. the focus is a "thank you" message, surrounded by colourful paper cutouts arranged in a heart shape. this template is perfect for expressing gratitude and appreciation on social media platforms. [GEN] <bkg-image> [IMG: vector embedding] <text> thank you![txtparams] [COLOUR: vector embedding] !43 [] !71 ! 107 ! 114 !88 !-13 !0 [FONT: vector embedding] [EOS]

Once the training module 116 generated training data records based on all the selected designs (e.g., by executing methods 600-800), it may store the training data records in the training data library 130 until the training data records are required to train the design generation system 120.

*Training and using the design generation system*

As described previously, the design generation system 120 is trained to generate designs (or more specifically model representation data of designs). It does so in an autoregressive manner - that is, it is it generates the model representation data in steps and in each step it is trained to sequentially predict the next token of the model representation data based on the previously observed and previously output tokens. That is, during training, the model learns, for each position, the next token in the sequence based on the previous tokens so far by assigning probabilities to tokens based on its training.

During inference, the model starts with a special "start" token and predicts the next token in the sequence based on the tokens generated so far by assigning probabilities to tokens based on its training. Typically, the token with the highest probability is used as the next part of the input. The predicted token is then appended to the input sequence, and the process iterates until an end-of-sequence token is generated or a maximum sequence length is reached.

Further, as described previously, the model representation data includes structural tokens (e.g., element indicators, number indicators (e.g., "!"), "[txtparams]", "[]", etc.) These tokens do not have regular linguistic meaning in natural language, but represent structural or formatting aspects of the model representation data that the model learns. These structural tokens are embedded in the embedding space of the LLM 302 and during the training process, the weights of the input and output linear layers of the LLM 302 are fine-tuned to enable it to learn these structural tokens and their placement in the model representation data.

Further still, during the training process, the weights of various layers of the design generation system 120 (e.g., input and output projection layers 306-310, and/or one or more intermediate linear layers of the LLM 302) are learnt to enable these layers to accurately project embeddings of other modalities into the text embedding space, and into the common comparison space.

Training the design generation system 120 in this manner, allows it to process arbitrarily interleaved media-and-text inputs, and generate free-form text interleaved with retrieved media assets (e.g., media items, colours, fonts, bounding boxes, etc.).

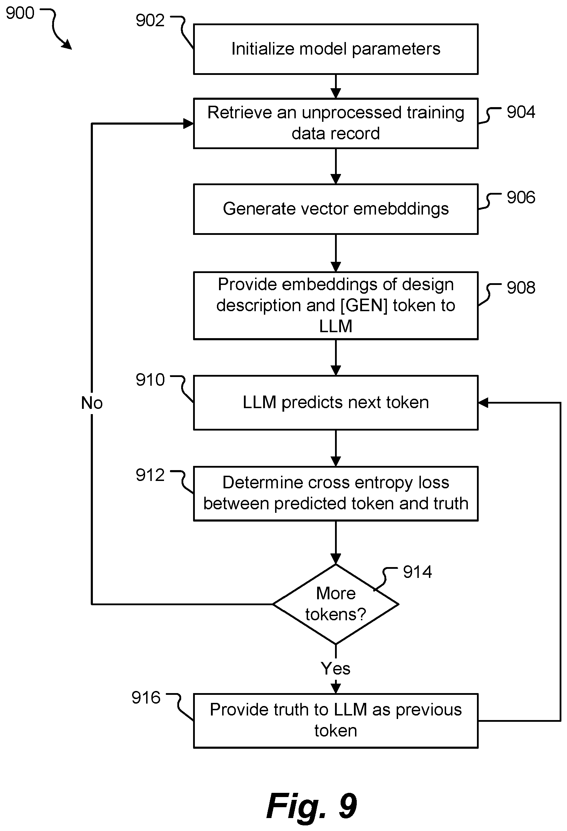

A method for training the design generation system 120 will now be described with reference to Fig. 9

Generally speaking, a teacher-forcing methodology is adopted for training the design generation system 120. In this technique, during training, the LLM 302 is fed a ground truth token from the model representation data at each token generation step as input instead of its own generated output token from the previous token generation step.

The method 900 commences at step 902, where the design generation system 120 is initialized. This may include adding the structural and special tokens to the text embedding space and setting the weights of the various sub-models of the design generation system 120.

As the LLM 302 and the encoders 304 are already pre-trained, these models are initialized with their previously learnt weights and biases. However, new tokens are added to the embedding space of the LLM 302 for each structural token and special token introduced in the model representation data. For the structural tokens the LLM 302 is trained to learn the meaning of the tokens and the relationships between those tokens and other tokens in the text embedding space. Accordingly, the structural tokens are initially added with random vector embeddings and the weights of the model that correspond to these structural tokens are initially set with random values.

For any special numerical tokens added to the text embedding space, e.g., tokens generated to capture the numbers that represent the bounding box and positional parameters, a different initialization may be used. For example, if a number was previously represented by a single token in the existing vocabulary of the LLM embedding layer 412, the new embedding is initialized with the pre-existing embedding for that token. Conversely, if a number was represented by multiple tokens in the existing vocabulary of the LLM embedding layer 412, the new embedding is initialized as the aggregate of the existing vector embeddings representing that number.

The weights of each of the projection layers 306-310 may also be set to random values or to predetermined values. As described previously, these weights typically determine the transformation applied to the input data as it passes through the corresponding projection layers 306-310. Additionally, the projection layers may include bias terms, which are constants added to the weighted sum of inputs. Biases help the projection layers learn the correct output even when all input values are zero. In case predetermined values are utilized, the predetermined weight and bias values for the various projection layers 306-310 may be adapted from existing projection layer models. When initializing the projection layers with random weights and biases, each weight and bias parameter in these layers may be set to a random value. These random values may be selected from a distribution with a mean of 0 (such as a normal distribution or a uniform distribution) and a small standard deviation.

Initializing the weights randomly helps break symmetry and prevents neurons in the projection layers 306-310 from computing the same function. If all weights were initialized to the same value, the neurons would produce identical outputs during forward propagation, and there would be no diversity in the behaviours of the various projection layers. Random initialization ensures that neurons learn to extract different features from the input data.

At step 904, the training module 116 retrieves training data from the training data library 130 and selects an unprocessed training data record from the retrieved training data. The number of training data records utilized to train the design generation system 120 may vary. In some embodiments about 500,000 training records may be utilized and retrieved at this step. As described previously, each training data record or training 'prompt' is made up of the concatenation of the design description, a [GEN] token (that is to be learnt by the LLM 302 to start to generate the model representation data tokens based on the design description) and the actual model representation data corresponding to the design description.

At step 906, vector embeddings of any special tokens present in the model representation data are mapped to the text embedding space and the common comparison space. If any of the special tokens are not already converted into vector embeddings by their corresponding encoder during the training process, these special tokens are first passed to the corresponding encoders 304 to generate vector embeddings. For example, if the model representation data includes two [IMAGE] special tokens, one [COLOUR] special token and one [FONT] special token, these tokens are passed to the corresponding media, colour, and font encoders. The encoders 304 analyse these tokens and generate vector embeddings.

The vector embeddings of the special tokens are then passed as inputs to the input projection layer 306 and the input comparison projection layer 308. For example, the media encoder 304A passes the vector embeddings for any media items (e.g., graphics, images, videos, or audio items) it has encoded to its own input projection layer 306A and input comparison projection layer 308A. The font and colour encoders 304B, 304C similarly pass any vector embeddings they have generated for any font families and colours, respectively to their own input projection layers 306B, 306C and input comparison projection layers 308B, 308C.

Each input projection layer 306 maps the vector embeddings received by the layer into the text embedding space used by the LLM. As the weights of the input projection layers 306 are initially randomly set, the mappings performed by the input projection layers 306 are unlikely to be accurate. For example, the input projection layers 306 may incorrectly map certain image, colour and/or font embeddings close to some text embeddings they are dissimilar to.

Each input comparison projection layer 308 maps the vector embeddings from its corresponding encoder into the common embedding space. As the weights of the input comparison projection layers are also randomly set, the mappings performed by the input comparison projection layers 308 are also likely to be inaccurate initially. For example, the input comparison projection layers 308 may also initially incorrectly map image, colour, and/or font embeddings close to other embeddings they are actually dissimilar to.

At step 908, the design description and the [GEN] token from the training sequence are provided to the LLM 302.

At step 910, the LLM 302 takes the design description and the [GEN] token as an input prompt and learns the next token in the sequence. In case the decoder-only transformer architecture 400 is utilized, this generally includes the embedding layer 412 converting each text token (such as design description) in the training example into a vector embedding.

Positional encoding may be added to the input embeddings via the positional encoder 414 to provide information about the position of each token in the design description. These positional encodings allow the LLM 302 to understand the sequential order of tokens in the training example. The input embeddings with positional encodings are then passed through the decoder layers 402, where each encoder layer includes the multi-head self-attention layer 404 followed by the feedforward neural network layer 408.

The self-attention layers 404 compute attention scores between all pairs of vector representations of tokens in the training example. The self-attention mechanism computes weighted sums of the values based on the attention scores, resulting in contextualized representations for each token, the feedforward layer 408 learns complex interactions and features from the input representations, which are used for predicting the next token. The output of the feedforward neural network layer 408 is passed through a linear transformation (at 416) followed by a softmax function (at 418). This produces the output probabilities for each potential next predicted token. In some embodiments, the output is a probability mass function (PMF) that assigns probabilities to every conceivable token in the vocabulary, conditioned on the context established by previous tokens.

Each layer transforms the input representations and enriches them with contextual information, ultimately enabling the LLM 302 to predict the next token. The output is the next predicted token.

At step 912, a loss function is determined. This is determined by comparing the predicted next token with the ground truth - i.e., the actual next token in the model representation data associated with that training prompt. In case the LLM 302 generates the token correctly, the loss is zero. However, if the predicted token does not match the ground truth, the loss is a non-zero value. In one example, the loss function may be a cross-entropy loss function. In alternative embodiments, alternative loss functions may be utilised. If the loss function is a non-zero value, it is backpropagated to update the weights and biases of the LLM 302. As pre-learned weights are frozen and pre-existing tokens in the LLM's vocabulary are masked, the back-propagated loss function updates the weights and biases of the LLM 302 that are associated with the new structural and special tokens.

Various methods/techniques can be utilized to keep the pre-learned weights and biases intact while only updating the weights and biases associated with the new vocabulary (e.g., the new structural and special tokens). These methods essentially fine-tune the pretrained LLM 302 to learn the new vocabulary and include, amongst other examples: utilizing Low-Rank updates, adapters, sparse parameter selection, and prompt tuning.

Low-Rank Adaptation (or LoRa) is a technique designed to enhance the efficiency of fine-tuning LLMs. LoRA preserves the pre-trained model's knowledge while adapting it to the new task of generating model representation data. It accomplishes this by keeping the pre-trained model weights fixed and introducing trainable rank decomposition matrices into the model architecture. These rank decomposition matrices, which are part of the mathematical machinery of low-rank approximations, are then trained (via backpropagation at step 912), adding a degree of adaptability to the model without the need for complete fine-tuning of all model parameters.

From a mathematical perspective, LoRA involves approximating the pre-trained model weights with lower-rank matrices. These rank decomposition matrices augment the existing model weights, and only these newly introduced weights (e.g., associated with the structural and special tokens) are updated during back-propagation at step 912. This approach has several advantages, including the prevention of catastrophic forgetting since the original pre-trained weights remain unaltered. Additionally, rank-decomposition matrices are significantly more compact in terms of parameters compared to the full model, making trained LoRA weights highly portable. These LoRA matrices are incorporated into the multi-head attention layers 404 of the LLM 302.

It will be appreciated that LoRA is an example of one method/technique that can be utilized to fine-tune the LLM 302 to learn the new vocabulary and any other suitable methods/techniques may be utilized instead without departing from the scope of the present disclosure.

At step 912, the loss function is also backpropagated to update the weights and biases of the input projection layers 306.

Next at step 914, if more tokens remain in the design record, the method proceeds to step 916, where the previous ground truth token is provided to the LLM 302 as an input. In this context, the previous ground truth token is the ground truth token that corresponds to the token predicted (correctly or incorrectly) by the LLM at 910. The LLM 302 uses this previous ground truth token to predict the next token (e.g., in a manner similar to that described with reference to step 910). Steps 910-916 are then repeated until all tokens from the training record are received at the input of the LLM 302.

Once the last token is received, the method returns to step 904, where the next unprocessed training record is retrieved. This method then repeats until all the training records are fed to the network.

In addition to fine-tuning the LLM 302 and training the input projection layers 306, the input comparison projection layers 308 and the output comparison projection layers 310 are also trained during the training process 900 to more accurately map embeddings to the common embedding space. These layers 308,310 may be trained using contrastive loss. For example, if the LLM 302 predicts any special tokens associated with design assets (such as media items, colours, and/or fonts), the vector embeddings of these special tokens are passed to the output projection layer 310 in a batch (of a suitable size). For example, a batch of predicted special tokens may be created based on all the predicted special tokens generated in a training batch (e.g., a number of input training sequences). These batches of predicted special tokens can then be used to compute contrastive loss.

To do so, the output comparison projection layer 310 maps the vector embeddings for each of the predicted tokens in a batch to the common embedding space. Pairs of embeddings are then formed along with labels indicating whether they are similar or dissimilar. In some examples, the pairs may be formed between each predicted token and the corresponding input token that was projected into the common embedding space by the input comparison projection layer 308 (e.g., at step 908). If a predicted token in a pair matches or is similar to the corresponding input token (e.g., because the LLM 302 predicted a correct token), the pair is labelled as a positive sample and if a predicted token in a pair does not match the corresponding input token (e.g., because the LLM predicted the wrong token), the pair is labelled as a negative sample. In another example, matrix multiplication of vectors can be computed. To this end, a matrix of input comparison vectors and a matrix of output comparison vectors is obtained. These matrices are then multiplied. The diagonal of the resulting matrix are the pairs of embeddings labelled as similar. While the out of diagonal matrix are the pairs of embeddings that are labelled as dissimilar.

Once the positive and negative samples are created, contrastive loss is computed. Contrastive loss quantifies the similarity or dissimilarity between the predicted tokens in the batch and the corresponding inputs that were projected into the common embedding space by the input comparison projection layer 308 and encourages positive samples to have embeddings that are closer together and negative samples to have embeddings that are further apart. In one example, the loss function may be defined as:

$$L = \frac{1}{2N} \sum_{i=1}^{N} y_i \cdot d^2 + (1 - y_i) \cdot (margin - d, 0)^2,$$

where: N is the number of input pairs, $y_i$ is the label for the ith pair (1 for positive, 0 for negative), d is the distance between the embeddings of the input pair, and margin is a hyper-parameter that controls how far apart dissimilar pairs should be in the embedding space. This contrastive loss is then back-propagated through the output comparison projection layers 310 to update their weights and biases to minimize the loss.

In another example, the loss function may be defined as:

$$L = -E\left[ log \frac{\exp(sim(z_i, z_j)/\tau)}{\sum_{K=1}^{K} \exp(sim(z_i, z_k)/\tau)} \right]$$

Where $z_i$ and $z_j$ represent the embeddings of the positive pair, $z_k$ represents the embeddings of negative pairs, and $K$ includes the positive pair and all negative samples in the denominator. This noise function is derived from the principle of Noise Contrastive Estimation (NCE). It aims to maximize the mutual information between positive pairs of samples. The expectation is computed over all positive pairs in the batch.

As the weights of the output comparison projection layers 310 are also randomly set initially, the mappings performed by the output comparison projection layer 310 may also be inaccurate initially resulting in larger contrastive loss. For example, the output comparison projection layers 310 may also initially incorrectly map image, colour, and/or font embeddings close to other embeddings they are actually dissimilar to.

By using contrastive loss, the weights of the input and output comparison projection layers are modified to enable these layers to accurately map tokens to the common embedding space and align their corresponding input and output projections. This mechanism is used for each modality. In particular, contrastive learning can be used to learn a mapping between the input and output tokens to align representations from different modalities. For example, words and images that are for a related topic (for instance, a sentence - "a dog reading a newspaper" and an image of a dog reading a newspaper) are mapped to a similar location in the embedding space using contrastive loss. Similarly, images that primary include the colour red may be mapped to a similar space in the common embedding space as the colour red.

It will be appreciated that in the method described above, training ends when all the training records are fed to the design generation system 120. In other examples, the training may end when the cross-entropy and contrastive loss functions have been sufficiently minimized.

It will be appreciated that initially, the loss in the design generation system 120 will be high, as the LLM 302 will rarely be able to accurately predict the next tokens. However, as more and more training examples are fed to the design generation system 120, it understands the structure of the model representation data, the positions of structural tokens, the positions of special tokens, etc., via cross entropy loss and the relationships between the various modalities via contrastive loss. Accordingly, over time, as more and more training records are fed to the LLM the cross entropy and contrastive losses reduce and the LLM 302 gradually begins to generate more accurate predictions and the projection layers 306-310 begin to map the vector embeddings more accurately to the text embedding space and the common embedding space.

*Generating a design*

As described previously, the design generation system 120 is an autoregressive system that generates tokens of the model representation data sequentially. This auto-regressive nature is modified for the inference phase - i.e., when the trained system is used to generate designs in real time.

In particular, during inference, the design generation system 120 generates the model representation data autoregressively. However, if the design generation system 120 generates a special token, it pauses the autoregressive generation, retrieves a design asset corresponding to the special token from the design asset library 132, replaces the special token with the special token for that design asset in the generated model representation data, and provides the special token for that design asset as the previously generated special token to the input of the LLM and continues the autoregressive generation.

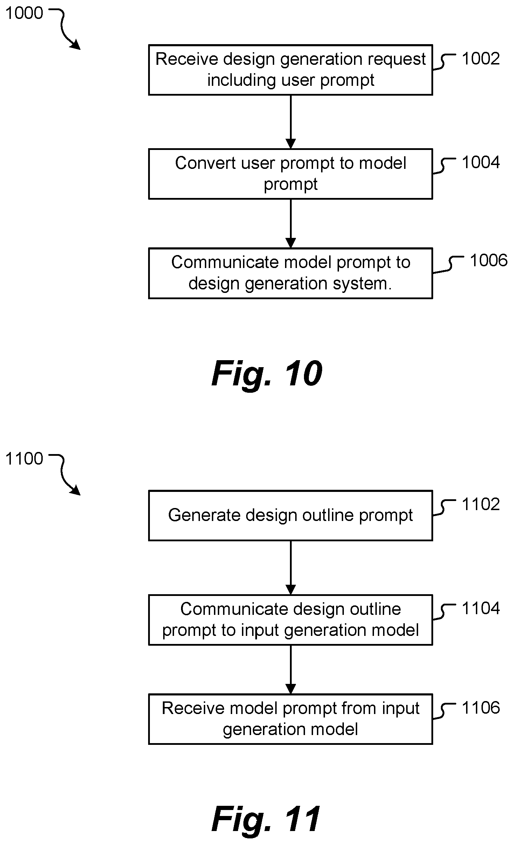

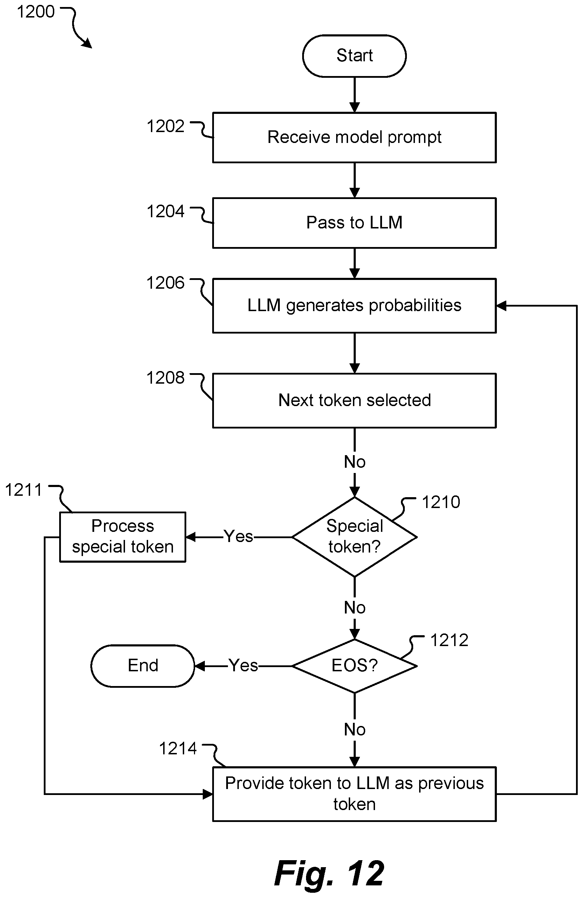

A method for generating a design at inference will now be described with reference to Fig. 10-12. In particular, Fig. 10 depicts an example method 1000 for receiving a design generation request and generating a model prompt from the request. FIG. 11 depicts a method 1100 for automatically generating one or more designs from a model prompt and Fig. 12 depicts an example method for retrieving design assets during design generation.

The operations of these methods will generally be described as being performed by the client application 152, the digital design application 114, the design generation system 120, and the input generation model 122. The operations could, however, be performed by one or more alternative applications running on the design generation server 110 and/or one or more alternative computer processing systems.

Design application 114 may be configured to perform method 1000 in response to detecting one or more trigger events. As one example, design application 114 may communicate with application 142 (e.g. via network 150) to cause application 142 to display a user interface, e.g., user interface 500 displayed in Fig. 5A. In some embodiments, the method 1000 may commence when a user inputs a user prompt in the prompt input region 502 of this UI, adds one or more additional design parameters (optionally), and then activates the generate design control 506.

In other embodiments, the UI 500 may be configured to receive non-textual inputs - e.g., it may be configured to receive speech inputs. In this case, the UI 500 may convert the speech input into text and trigger method 1000.

At step 1002, a request for generating a design is received at the design application 114. In one example, once the user activates the control 354, the client application 142 creates a request for generating one or more designs and passes the user prompt along with the request to the design application 114. The user prompt may be in the form of a text string, for example, of 5 or more words and may include additional parameters such as target audience, design type, etc. The table below shows an example of the input prompt that may be received as part of the design generation request at this step -

[{"name":"I want to create a design about","dataType":"text","value":"a promotion for music lessons" },{"name":"Target audience","dataType":"text","value":["Children") },
{"name":"Instrument","dataType":"text","value": ["Piano", "Flute" "Violin")},{"name":"Music genre", "data Type": "text", "value": ["Classical"]}], "additional Data":{}}

In this example, the text "I want to create a design about" may be provided by the user in the input prompt region 502 of it may be text added by the client application 142 when generating the design generation request. The text, "a promotion for music lessons" is the text input by the user in the input prompt region 502. This example design generation request also includes additional information of: target audience: Children; instrument: Piano, Flute, Violin; and music genre: Classical. These may be additional parameters provided by the user in the input prompt region or using the one or more parameter controls 504 provided in the GUI 500.

At step 1004, the design application 114 generates a model prompt for the design generation system 120 based on the input prompt received in the design generation request. In some embodiments, this includes communicating the input prompt to the input generation model 122 along with a request to generate the model prompt. Method step 1004 will be described in more detail with reference to Fig. 11.

At step 1006, the design application 114 receives the model prompt for the input generation model 122 and communicates it to the design generation system 120.

Method 1100 commences at step 1102, where the digital design application 114 is provided the input prompt received at step 1002 and generates a design outline prompt. The content of the design outline prompt will depend on the type of input generation model 122 being used. If the input generation model 122 is a general purpose LLM, the design outline prompt includes the user prompt and configuration data, which provides instructions to the input generation model 122 to generate the design generation prompt. In case the input generation model 122 includes a specific ML model that has already been trained for the specific task of generating design generation prompts, the design outline prompt may only include the user prompt from the design generation request.

The precise format of the configuration data depends on a variety of factors, including the type of LLM (e.g., configuration data for use with OpenAI's ChatGPT may differ from the configuration data required for Google's Bard), the training mechanism of the input generation model 122, and the content of the input prompt (and/or other available data).

In one example, the configuration data for the design outline prompt may be similar to the configuration data used to generate design descriptions (in method 800) and may include a brief description of the task (e.g., to generate a description of the design based on the input prompt), parameters for the task (e.g., output format, number of sentences, rules, etc.), and one or more training examples of input prompts and the design generation prompts the input generation model 122 is expected to generate based on those input prompts. The table below shows examples of configuration data that can be used.

| Description of task: | *Provide a brief description of the design based on the INPUT PROMPT.* |
|---|---|
| Parameters: | *"If text should appear in the design, please enclose it in double quote"* |

(continued)

|  | The description should capture the essence of the type, goal, target audience, subject, and style. |
|  | The description must start with '<TYPE>'. |
|  | Do not include phrases like "I want to create". |
|  | The description should end with '[GEN]' |
| Examples: | Input prompt: "A motivational Instagram post that includes the text, "don't talk, just act. Don't say, just show" |
|  | Expected Output: |
|  | Type: Instagram post |
|  | Description: this Instagram post features a modern and minimalistic design with a bold, colourful purple, orange and blue blurred background. The motivational quote, "don't talk, just act. Don't say, just show" is displayed within a square frame, making it perfect for a business or personal feed seeking to inspire and motivate followers |

In this example configuration data, the parameters include instructions such as enclosing any text that should appear in the design in double quotes, the content of the description, that the description should start with the design TYPE and end with the token [GEN]. It will be appreciated that in other examples, these parameters may be different depending on the desired format of the output required in other implementations.

In some embodiments, the same configuration data may be used to configure the input generation model 122 to generate the model prompt every time. In such cases, the configuration data may be predefined and stored in data storage 126. In other embodiments, the configuration data may vary (e.g., depending on user requirements). For example, a user may provide a tone for the design (e.g., funny) in the input prompt that overrides any preset tone for the design in the configuration data. In this case, the parameters of the configuration data may be updated to include the user input override before the configuration data is added to the design outline prompt.

At step 1102, the digital design application 114 retrieves the configuration data from the data storage 126, determines whether the configuration data needs to be updated (e.g., based on the received user prompt), and combines the configuration data with the input prompt to generate the design outline prompt. In one embodiment, the design application 114 generates the design outline prompt by constructing a text string from one or more component parts of the configuration data and the input prompt (e.g. by concatenating the component parts and the input prompt together).

At step 1104, once the design outline prompt is generated, the digital design application 114 communicates the design outline prompt to the input generation model 122.

By way of the configuration data, the input generation model 122 is cued to generate a model prompt based, in part, on the input prompt. Based on the example configuration data shown above, the input generation model 122 is cued to generate a design type descriptor and a description. The design type descriptor may be a string of text characters that describes a design type for a design (e.g., post, presentation, poster, card, etc.), based in part on the input prompt. The description may be a string of characters, which describe the design, e.g., in 2-3 sentences that capture the essence of the type, goal, target audience, subject, and style of the design, based in part on the input prompt.

At 1106, the design application 114 receives the model prompt output by the input generation model 122 as a string of output text characters, referred to as a completion. An example of the output generated by the input generation model 122 at this point for an input prompt "A motivational Instagram post that includes the text, "Don't talk, just act. Don't say, just show. Don't promise, just prove", is provided in the format "Type: {} and Description: {} in the table below -

| Type: Instagram post. |
| Description: This Instagram post template features a modern and minimalist design with a bold, colourful purple, orange, and blue blurred background. The motivational quotes "Don't talk, just act. Don't say, just show. Don't promise, just prove." are displayed with in a square frame, making It perfect for a business or personal feed seeking to inspire and motivate followers. [GEN] |

The design application 114 subsequently communicates the model prompt to the design generation system 120 (at step 1006). In some embodiments, before doing so, the digital design application 114 may parse or process the text of the completion based on the format rules specified in the configuration data to identify the design type descriptor and description. For example, it may parse the completion and identify the term "type" or "description" and then identify a string of characters following a colon (":") up until a carriage return. Alternative parsing, text analysis, and processing techniques are also possible to identify the design type descriptor and/or description in the design generation prompt.

Once the individual components of the design generation prompt are determined, the design application 114 communicates the parsed model prompt to the design generation system 120. The methods 1000-1100 then end.

It will be appreciated that in method 1100, it is presumed that the configuration data is provided to the input generation model 122 each time a new design generation prompt is required. However, this need not be the case in all implementations. In other implementations, the configuration data may be provided to the input generation model 122 each time an instance of the input generation model 122 is invoked. If the same input generation model 122 instance is then used for subsequent design generation prompt requests, the configuration data need not be submitted to the input generation model 122 instance again as the input generation model 122 can remember the configuration data it has been provided previously and utilize that configuration data for subsequent design generation prompt requests. Once the input generation model 122 instance is closed or exited, it may flush the configuration data and the design application 114 may need to resend the configuration data along with a design generation prompt request when a new instance of the input generation model 122 is invoked.

Further still, in method 1100, it is presumed that the input generation model 122 is a general purpose LLM that has not previously been trained or configured to provide design generation prompts in the required manner. However, this need not be the case in all implementations. In some implementations, a specific purpose ML system may be adopted that has been trained using copious amounts of training data of input prompts and desired output design generation prompts. There is no need to provide additional configuration data for such specifically trained input generation models and in such cases, the design generation prompt request may simply include the input prompt.

Fig. 12 illustrates an example method 1200 performed by the design generation system 120 to generate a design based on a received model prompt. The method 1200 commences at step 1202, where the design generation system 120 receives the model prompt. In one example, the model prompt may be as depicted in the table above.

At step 1204, the model prompt (i.e., the design description and the [GEN] token) is passed to the LLM 302.

At step 1206, the LLM 302 takes the design description and the [GEN] token as an input prompt and predicts the next token in the sequence. In case the decoder-only transformer architecture 400 is utilized, this generally includes the embedding layer 412 converting each text token (such as design description) in the training example into a vector embedding.

Positional encoding vectors may be added to the input embeddings via the positional encoder 414 to provide information about the position of each token in the design description. The input embeddings with positional encodings are then passed through the decoder layers 402, where each encoder layer includes the multi-head self-attention layer 404 followed by the feedforward neural network layer 408.

The self-attention layers 404 compute attention scores between all pairs of vector representations of tokens in the input prompt. The self-attention mechanism computes weighted sums of the values based on the attention scores, resulting in contextualized representations for each token, the feedforward layer 408 learns complex interactions and features from the input representations, which are used for predicting the next token. The output of the feedforward neural network layer 408 is passed through a linear transformation (at 416) followed by a softmax function (at 418). This produces the output probability mass function for each potential next predicted token.

The method then proceeds to step 1208 where the next token is selected. The same sampling method as used during training is used at inference time to select the next token.

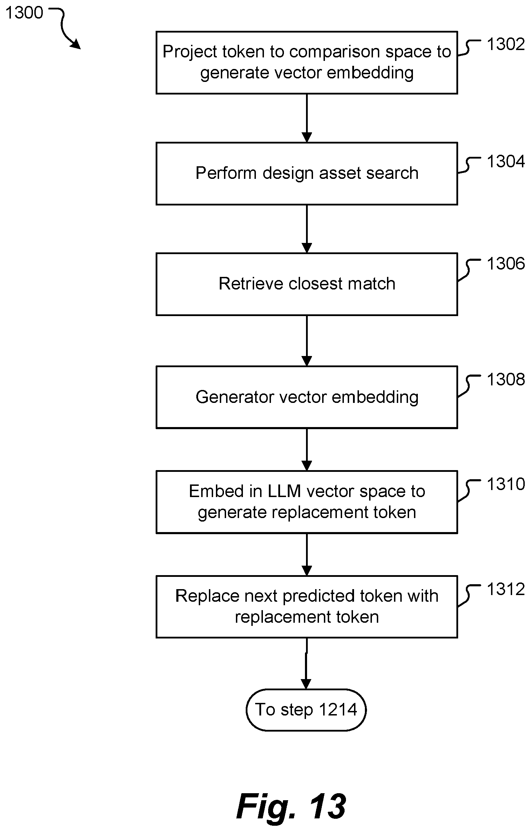

Once the next token is selected, the method proceeds to step 1210, where the LLM 302 determines whether the next token is a special token associated with a design asset. The LLM determines that the next token is a special token associated with a design asset, e.g., if it has a particular format, such as the special characters IMAGE, FONT, or COLOUR at the beginning of the token. If the LLM 302 determines that the next token is a special token associated with a design asset, the method proceeds to step 1211 where the special token is processed. This method step is described in detail with reference to Fig. 13.

Alternatively, if the LLM 302 determines that the next token is not a special token associated with a design asset, the method proceeds to step 1212, where the LLM 302 determines if the next token is an end of sequence [EOS] token. During training, the LLM 302 learns to predict this special token when it encounters the end of a sequence in the training data. During method 1200, the LLM 302 continues generating tokens until it predicts the [EOS] token at step 1208.

If the LLM 302 determines that the next token is an [EOS] token, the method 1200 ends and the sequence of tokens generated by the LLM 302 up until that stage are passed to the design application 114. Alternatively, if the LLM 302 determines that the next token is not an [EOS] token, the method proceeds to step 1214, where the next token is passed to the input of the LLM 302 as the previous token.

The method then reverts to step 1206. This process then continues until the [EOS] token is predicted. The method 1200 ends once this token is predicted.

Returning to step 1210, if the LLM 302 determines that the next token is a special token associated with a design asset, method step 1211 is executed. This method step is described in detail with reference to Fig. 13. In particular, Fig. 13 depicts an example method for processing a special token associated with a design asset. The method 1300 commences at step 1302, where the last hidden layer corresponding to the special token is projected to the common embedding space.

In some embodiments, to do so, the special token is communicated to the output comparison projection layer 310. This layer projects or maps the vector embedding of the special token to the common embedding space.

Projecting the special token to the common embedding space includes performing a linear transformation, such as a matrix multiplication followed by a bias addition to the vector embedding of the special token. For example, if the special token is for an image embedding (which might have thousands of dimensions representing features extracted from the image) to the common embedding space (which might have hundreds of dimensions representing features extracted from different modalities), the linear transformation would involve multiplying the image embedding vector by a matrix of appropriate dimensions and adding a bias vector to align the image embedding with the common embedding space.

This transformation process changes the vector embedding values as the original values are multiplied by different weights and biases to fit into the new space. However, the transformation still preserves or captures relevant information from the original embedding while aligning it with the common embedding space.

At step 1304, the output module 118 receives the vector embedding value from the common embedding space and uses this vector embedding value to perform a search for a design asset in a design asset library 132. If the predicted next token corresponds to a media item, the search is performed in the media library 134. If the predicted next token corresponds to a colour or a font, the search is performed in the colour library 138 or font library 136.

In some examples, the common embedding space vector embeddings are precomputed for each of the design assets stored in the design asset libraries 132 and indexed as described previously. In such examples, the common embedding space vector embedding of the predicted next token is compared with the common embedding space vector embeddings of all the design assets stored in the corresponding design asset library 132 to determine the design asset that has the most similar vector embedding to the vector embedding of the next predicted token.

In some examples, identifying the closest matching vector embedding involves measuring a similarity or distance between the vectors in the vector space. These can be measured using any known techniques such as Euclidean distance or cosine similarity.

Euclidean distance measures the straight-line distance between two vectors in a multidimensional space. It is calculated as the square root of the sum of the squared differences between corresponding elements of the vectors. To determine the closest vector embedding to the next predicted token's vector embedding using Euclidean distance, the Euclidean distance between the vector embedding of the next predicted vector and all other vector embeddings in the space is computed and then the vector embedding that results in the smallest distance is selected as the closest match.

Cosine similarity measures the cosine of the angle between two vectors in a multidimensional space. It is calculated as the dot product of two vectors divided by the product of their magnitudes. To determine the closest vector embedding to the next predicted token's vector embedding using cosine similarity, the cosine similarity between the next predicted token's vector and all other vectors in the space is computed and then the vector embedding that results in the largest similarity value is selected as the closest match.

At step 1306, the identified closest matching design asset is retrieved. If the actual design asset is retrieved instead of its vector embedding (e.g., in case the vector embedding is not present), the method proceeds to step 1308, where the closest matching design asset is processed by the corresponding encoder 304 to generate a vector embedding for the design asset. For example, if the design asset is a media item, it may be processed by the media encoder 304A. Alternatively, if the design asset is a colour, it may be processed by the colour encoder 304C and if the design asset is a font, it may be processed by the font encoder 304B. The encoder 304 generates a vector embedding for the design asset.

Next, at step 1310, as the embedding generated by the encoder 304 (or retrieved from the design asset library 132) is for that specific modality, the vector embedding is passed to the input projection layer 306 associated with that encoder 304 to project or map the vector embedding to the text embedding space. This is similar to step 906 and therefore not described here again in detail.

The LLM 302 then replaces the vector embedding of the predicted next token (selected at step 1208) with the mapped vector embedding of the closest matching design asset to generate a replacement token) at step 1312. The method then proceeds to step 1214, where this replacement token is provided to the input of the LLM 302 as the previous token so that it can recommence the autoregressive token generation.

At the end of process 1200, the design generation system 120 outputs a predicted design based on the model prompt. The predicted design is in the form of model representation data. In one example, the output from the design generation system 120 may be as shown in the table below

<bkg-color> [COLOUR] <image> -48 -10 161 124 0 0 [IMAGE] <image> 184 129 145 97 -139 1 [IMAGE] <image> 112 146 131118 0 2 [IMAGE] <image> 64 -55 130 116 0 3 [IMAGE] <image> -36 206 150 113 O 4 [IMAGE] <image> 104 -58 146 118 0 5 [IMAGE] <image> 183 O 150 116 0 6 [IMAGE] <image> -60 -33 146 118 0 7 [IMAGE] <text> Don't talk, just act. Don't say, just show. Don't promise, just prove.

(continued)

| [txtparams] [COLOUR] 8 [] 52 911 51 97 0 8 [FONT] [EOS] |
| --- |

As shown in this example, the output corresponds to a design that includes a background having a particular colour represented by the first [COLOUR] token. It also includes eight images having specific bounding boxes and represented by the eight [IMAGE] tokens in the example. Finally, the design includes a text element "Don't talk, just act. Don't say, just show. Don't promise, just prove" having certain parameters. In particular, the text is in a particular colour represented by the second [COLOUR] token in this example and has a particular font which is represented by the [FONT] token. The output ends with an end of sequence token [EOS].

*Sampling method*

At step 1208, any one of various sampling methods can be utilized to select the next predicted token from the PMF generated as the output of the LLM 302 for each step in a sequence. In some embodiments, a greedy sampling method may be employed that selects the token with the highest conditional probability from the PMF as the predicted token.
In other embodiments, a nucleus sampling method may be employed in which the top-p tokens with the highest conditional probabilities are initially selected. To do so, the tokens are first sorted based on their probabilities and the tokens with probabilities adding up to the predetermined top-p probability are selected. A token is then selected from these top-p tokens as the next predicted token either deterministically (by selecting the most probable token) or stochastically (sampling based on the probabilities). In this way, if the model 302 is less confident there will be more potential tokens in the top-p from which the model 302 can select the next predicted token. On the other hand, if the model 302 is more confident, less tokens will be available in the top-p from which the model 302 can select the next predicted token.
According to some embodiments of the present disclosure, a custom-modified nucleus sampling method may be adopted. In this custom-modified sampling method, a linearly decaying probability schedule may be utilized when predicting tokens for one entire sequence - i.e., one complete design representation data record. That is, the predetermined probability $p$ is gradually decreased for each subsequent step of the autoregressive generation process - e.g., the top-p probability may be 0.6 for the first step, then 0.55 for the next step, then 0.5 for the next step in the sequence, and so on. This reduction in the top-p probability may persist until the sampling probability diminishes to a minimal level, at which juncture the LLM's sampling behaviour closely resembles that of a greedy sampling algorithm - i.e., the top result is selected. This structured decrease in sampling probability is designed to strike a balance between creativity (allowing the model 302 to select the next predicted token from a bigger set of tokens) and coherence (restricting the token selection from a smaller pool of tokens) in the generated tokens, ensuring that the predicted tokens are not only contextually aligned but also infused with a degree of inherent unpredictability and diversity.
To further enhance token selection, the sampling technique can be further modified to exclude its application to special or structural tokens. This modification acknowledges the intricately structured nature of the newly integrated multi-modality vocabulary, enabling distinct sampling probabilities and temperatures for different design components.
Specifically, the design generation system 120 applies a first distinct probability schedule for the initial elements of a design sequence, which are critical in defining the type of design element. This particular schedule is calibrated to foster the generation of both innovative and coherent design types. In contrast, the textual content within the design is governed by a different probability schedule (e.g. a second distinct probability schedule), one that is more attuned to the subtleties of language generation. Moreover, a third distinct probability schedule is employed for managing the positional elements of the design. This multifaceted sampling strategy ensures that different design components of the design, from its foundational type to its textual content and spatial configuration, is generated under a probability framework that is attuned to its specific features and requirements.
In one example, the probability schedules may be linearly decaying probability schedules that decay at different rates. In other examples, the probability schedules may be any other suitable schedule, such as exponentially decaying probability schedules, cosine delaying probability schedules, or linearly/exponentially growing probability schedules without departing from the scope of the present disclosure.

*Generating designs*

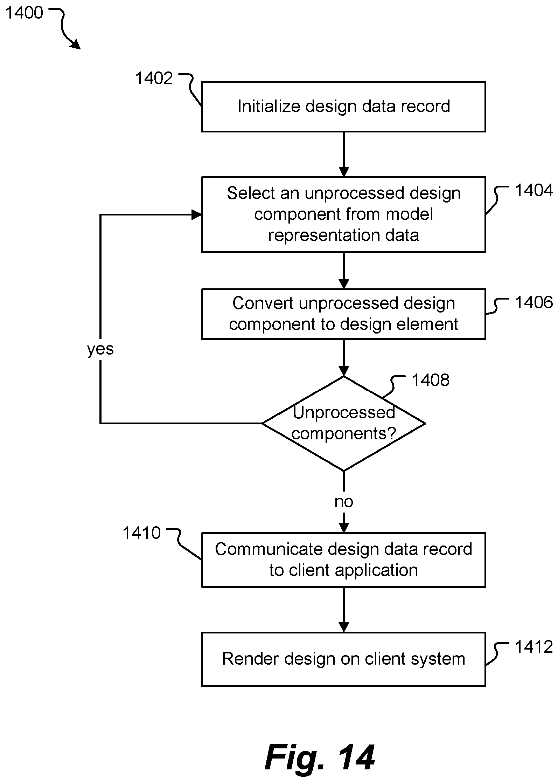

An example method 1400 for generating an editable design based on the design representation data output by the design generation system 120 will be described in the following section. In one example, this method may be performed by the output module 118.
In particular, the output module 118 processes the model representation data to initially generate a design record and then renders a design based on the design record. In some embodiments, the output module 118 converts the model representation data back into design elements and adds these design elements to the newly generated design record. For example, the output module 118 may parse or process the model representation data and identify respective design components in the model representation data and generate corresponding design element records based on these. This process is described in further detail in Fig. 14.

In particular, method 1400 commences at step 1402 where a design record is initialized. In particular, the output module 118 may generate a unique design identifier and store the design identifier in the design record. In addition, the output module 118 may include information from the model prompt into the design record. For example, it may add the design type from the model prompt in the design record. Further, based on the design type, it may populate the design dimensions field. An example design record at this stage is displayed below -

| Design ID | 273278 |
|-----------|--------|
| Design type | Instagram Post |
| Dimensions | 1080,1080 |

At step 1404, the output module 118 selects an unprocessed design component from the model representation data. To this end, the output module 118 parses the model representation data and identifies individual design components. It may do so using any suitable technique. Each design component commences with a component indicator, e.g., <bkg-colour>, <image>, <text>, etc. Accordingly, in one technique, the output module 118 can parse the output and identify each design component based on the component indicator. It can then select an unprocessed design component based on the order in which the design components are identified in the output. For example, in the first instance of the method, the output module 118 retrieves the first design component, i.e., the background component from the model representation data.

At step 1406, the output module 118 converts the design component into a design element and adds it to the design record and/or design element record. This may be done in various ways.

For example, if the selected design component is a background component (e.g., starting with the indicator <bkg-colour> or <bkg-image>, the output module 118 may update the design record and populate the background field of the design record. To do so, the output module 118 retrieves the vector embeddings from the [IMAGE] or [COLOUR] token in the background component and performs a lookup with this vector embedding in the media or colour asset library. It then retrieves the identifier of the image or colour asset from the media or colour asset library that has the same vector embedding as the IMAGE or COLOUR token in the background component. This image or colour asset is then added to the background field in the design record.

If the selected design component is a text component (e.g., starting with the indicator <text> indicator), the output module 118 converts this into a text design element and updates the design record (to include an element identifier for the text element in the element data field). In doing so, the output module 118 may generate a text element record and populate the type field of the text element record to be "TEXT." It may then store the text in the text component in the Text attribute of the text element record (e.g., it may retrieve a set of one or more characters between the <text> indicator and the [txrparams] token and add these to the text attribute of the text element record).

Further, the output module 118 may parse the bounding box numbers to populate the position and size attributes and parse the other positional numbers such as rotation, z-index, and/or opacity to populate the corresponding rotation and opacity attributes of the text element record. If the various numbers such as bounding box numbers, rotation, z-index, and/or opacity were quantized previously, these numbers are translated back to their original form based on the design size. For example, if the design size is 1080px x 1080px, the numbers may be translated back from the 256 x 256 size to the 1080 x 1080 size. Finally, it may populate the relevant attributes field of the text element record to include the font, font size, and font colour. To do so, the output module 118 retrieves the vector embeddings from the FONT and COLOUR tokens in the text component and performs a lookup with these vector embeddings in the font and colour asset libraries. It then retrieves the font and colour assets (e.g., a font name and a colour, such as an RGB value) from the font and colour asset libraries, respectively, that have the same vector embeddings as the FONT and COLOUR tokens in the text component. These font and colour assets are then added to the text element record.

In one example, the text element record generated at this step may be as follows -

| Key/field | Value |
|-----------|-------|
| Type | TEXT |
| Position | 52, 911 |
| Size | 51, 97 |
| Rotation | 0 |

(continued)

| Key/field | Value |
|---|---|
| z-index | 8 |
| Text | Don't talk, just act. Don't say, just show. Don't promise, just prove. |
| Attributes | Font: <font name><br>Font size: 8<br>Font colour: <font colour - e.g. RGB value> |

If the selected design component is a media item such as an image, a video or an audio (e.g., <image">, or <video"), output module 118 may recognize this to be a media element and may convert it into a media element at step 1406. In doing so, the output module 118 may generate a media element record and populate the type field of the media element record based on the component indicator, e.g., "IMAGE."

It may then parse the bounding box numbers immediately after the component indicator to populate the position and size attributes and the following two numbers to populate the rotation and opacity attributes of the image element record. As described previously, if any of the numbers were previously quantized, these numbers are converted into their original form based on the design type at this step. Finally, it may populate the media identifier of the image element record to include the identifier of the image corresponding to the [IMAGE] token in the media component. To do so, the output module 118 retrieves the vector embeddings from the IMAGE token and performs a lookup with this vector embedding in the media asset library 134. It then retrieves the media identifier of the media asset that has the same vector embeddings as the IMAGE token. This media identifier is then added to the image element record.

In one example, the image element record generated at this step may be as follows -

| Attribute | Value |
|---|---|
| Type | IMAGE |
| Position | (184, 129) |
| Size | (145, 97) |
| Rotation | -139 |
| Opacity | 1 |
| Media identifier | I12345 |

Once the design component is converted, the method proceeds to step 1408, where the output module 118 determines whether any unprocessed design components remain in the model representation data.

If the output module 118 determines that one or more unprocessed design components exist, the method reverts to step 1404 where the next unprocessed design component is selected. Method steps 1404-1408 are repeated until the output module 118 determines at step 1408 that no unprocessed design components remain in the model representation data. Thereafter the output module 118 may save the design record created in method 1400 in the data store 119 (e.g., in a temporary cache). Further, the output module 118 communicates the design and element records to the client application 142 at step 1410.

The client application 142 may then render the design for display on a UI on the client system 140 using the design and element records received from the output module 118 at step 1412. For example, the client application 142 may perform a lookup in the design type and design dimensions fields in the design record and generate a canvas having a suitable size based on the design type and design dimensions. Further, it may retrieve the background colour/image, fonts, colours, and images mentioned in the text and/or other media element records from the asset libraries and add these elements to the design depending on the position, size, rotation, and opacity information provided in the corresponding element records.

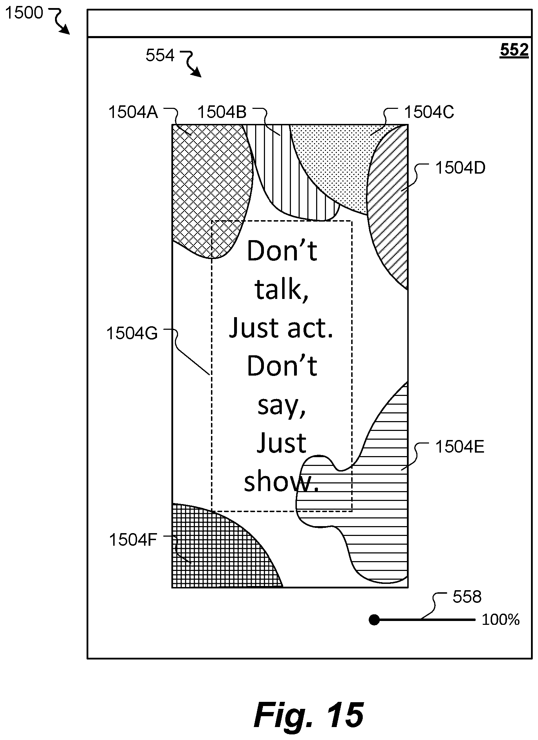

FIG. 15 shows an example UI 1500 generated and displayed on the client system 140 at the end of method 1400. In this example, the UI 1500 displays the design generated based on the model representation data generated by the design generation system 120 in method 1200 in preview area 554.

Once the design is displayed, the user may also be provided edit functionality within the UI 1500 to edit the displayed design. For example, the user may be able to delete/add/move elements (e.g., any of the elements 1504A-G), change colours of any of the elements 1504A-1504G, and/or change the colour, font, font size or even edit the text in text box 1504G using one or more controls (not shown) provided in the UI 1500. Other editing functionality may include, for example: adding a new element to the design and/or other operations.

UI 1500 may also provide a user with various controls (not shown) that can be used to export the output design. This may include, for example, one or more controls that allow a user to: determine an export location (e.g. on local memory such as 210 or a network accessible storage device); determine an export format (e.g. a file type); determine an export size/resolution; and/or other export options.

UI 1500 may further provide a user with various controls (not shown) that can be used to share the design. This may include, for example, one or more controls that allow a user to select a format (e.g. file type) and then share the resulting design (e.g. by attaching it to an electronic communication, uploading to a web server, uploading to a social media service, or sharing in an alternative manner). Application 142 may also provide a user with the option of sending a link (e.g. a URL) to the design (e.g. by generating a link and attaching a link to an electronic communication or allowing a user to copy the link).

Accordingly, in the manner described with respect to methods 600-1400, aspects of the present disclosure can be used to automatically generate and display editable designs based on user inputs or prompts. The systems described herein do so using an autoregressive multi-modal machine learning system that generates design tokens sequentially and retrieves any design assets from underlying design asset libraries during the design generation process. This not only improves the accuracy of the system in generating designs that match user input prompts, but also allows the system to take into account the various features and attributes of the retrieved design elements (such as aspect ratio) when determining subsequent elements of the design.

*Other embodiments*

In method 1400, the model representation data is first converted into a design record and then this design record is utilized to display the corresponding design. In other embodiments, the model representation data may be directly used to generate and display designs. In such examples, a specialized output module 118 may be utilized that is configured to understand and parse the model representation data to generate designs.

In the methods described above, a design generation system 120 generates a single design, i.e., model representation data, for a single design. In other embodiments, the design generation system 120 may generate model representation data for multiple designs.

In some embodiments, this may be done by feeding the same model prompt to the design generation system 120 multiple times.

In other embodiments, the design generation system 120 may be trained to generate model representation data for multiple designs based on a single model prompt provided once or it may be trained to generate model representation data for multiple designs based on multiple different model prompts.

In case the design generation system 120 is trained to generate model representation data in respect of multiple designs based on a single model prompt, the training data may be different from that described above. In particular, each training data record may include a single design description, but multiple model representation data components (each having some variation in one or more design assets, placement of one or more design assets, variations in text, etc.). During training, the design generation system 120 model may be trained to generate the multiple model representation data components in each training data record. Then during inferences, for a single user input prompt, the design generation system 120 may generate multiple model representation data components.

In case the design generation system 120 is trained to generate model representation data in respect of multiple designs based on multiple model prompts, the model prompt provided to the design generation system 120 may be different from that described above.

In particular, in this case, in method 1100, the input generation model 122 may be configured to generate a single design type descriptor but multiple design descriptions. The multiple descriptions may be suitably generated by defining that requirement in the configuration data parameters. For example, the task description and/or parameters of the configuration data can be altered to prompt the input generation model 122 to generate n number of design descriptions based on the input prompt by varying the subject, style, and/or other attribute of the design descriptions. Additionally or alternatively, the same user prompt and configuration data may be provided to multiple LLMs (or instances of LLMs) having varying parameters such as different temperature settings, training sets, or few-shot examples in order to generate multiple design generation prompts having variance in their respective descriptions.

These multiple design descriptions can then be used to create multiple model prompts from the same user prompt to instruct the design generation system 120 to generate multiple designs. Accordingly, controlled varying of design descriptions may enable greater variety with design outputs whilst remaining aligned with an original input prompt.

Whatever technique is utilized to generate model representation data for multiple designs, in some embodiments, designs or design previews may be generated for each of the multiple designs, e.g., using method 1400 and the multiple designs or design previews may rendered for display on the client system 140.

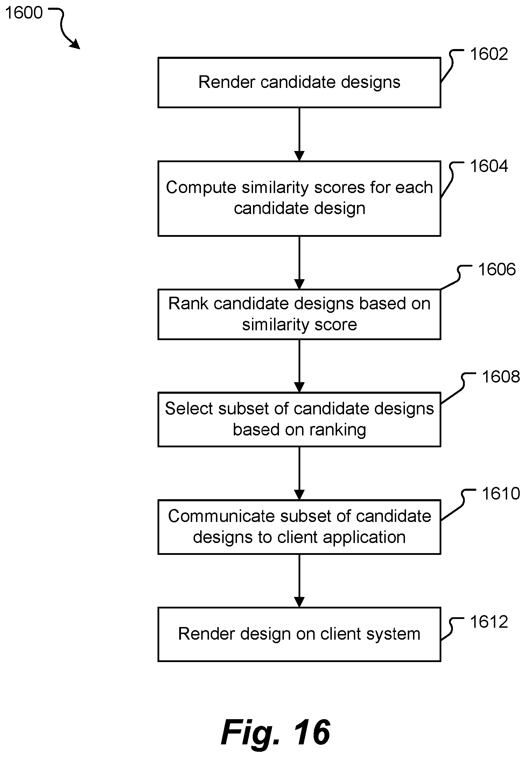

In still other embodiments, instead of rendering all the generated designs, a subset of the designs may be ultimately rendered on the user device. In this case, the set of designs may be referred to as candidate designs and the subset of designs may be referred to as the selected design(s). The subset of designs may be selected based on method 1600 described below with reference to Fig. 16.

Method 1600 commences at step 1602, where the candidate designs are generated based on the model representation data output by the design generation system 120. In some examples, each candidate design may be generated based on method 1400. In other examples, the model representation data may be directly used to render an image of each candidate design - e.g., by retrieving the relevant design assets from the assets library and arranging them based on the bounding box information associated with each design component in the model representation data.

At step 1604, similarity scores may be computed for each candidate design. In some embodiments, this may be done by comparing the rasterized version of the candidate designs with the user prompt or the model prompt. In one particular example, the similarity may be determined using a contrastive language-image pretraining (CLIP) score. CLIP score is a method for measuring the similarity between an image and its corresponding text caption. CLIP scores are typically between +1 and -1, where +1 indicates strong similarity between an image and a caption and -1 indicates strong dissimilarity between an image and a caption.

The CLIP score for each candidate design may be determined by generating a corresponding tuple of the candidate design image and corresponding user or model prompt. This tuple if fed to a visual encoder, such as CLIP, which is fine-tuned to assess the similarity and generate a CLIP score. The visual encoder generates a vector embedding for the image and a vector embedding for the user and/or model prompt and then computes a cosine similarity (-1 to +1) between the vector embeddings. +1 cosine similarity indicates that the vectors are identical, 0 indicates that they are orthogonal and -1 indicates that they are opposite.

Once the similarity scores are computed, the method proceeds to step 1606, where the candidate designs are ranked based on their similarity scores.

At step 1608, a subset of the candidate designs are selected based on the ranked similarity score. In some embodiments, the top *x* candidate designs are selected. In other embodiments, only candidate designs having a similarity score above a predefined threshold score may be selected.

At step 1610, the selected candidate designs and their corresponding design and element records are communicated to the client application152 for display on the client system 140. If multiple designs are selected, the design images may be displayed on the client device as design previews at step 1612.

If the user selects any one of the designs for further viewing, editing, publishing, etc., the selected design may be rendered using the corresponding design record. For example, the client application 142 may inspect the design type and design dimensions in the design record and generate a canvas having a suitable size based on the design type and design dimension. Further, it may retrieve the background colour/image, fonts, colours, and images mentioned in the text and/or other media element records from the asset libraries and add these elements to the design depending on the position, size, rotation, and opacity information provided in the corresponding element records.

In still other embodiments, the user prompt may also include a selected media item or other design asset (e.g., selected colour, font, etc.). For example, the user may upload an image or a font file along with the text input entered in the prompt input area 502. To accommodate for this, the model is trained to learn additional special tokens. The special token may be [URET] indicating that the model has to retrieve a user provided design asset during design generation. Further, the model prompt is adapted to include an indicator that the user has introduced a design asset.

In case the design asset is an image, the model prompt includes a prefix such as "Images:" following by "<user_img> for each image added by the user.

One example of a model prompt including two user images is -

Type: Instagram post. Description: This Instagram post template features a modern and eye-catching design with a sky blue background. The main focus is a "thank you" message, surrounded by colourful paper cutouts arranged in a heart shape.

this template is perfect for expressing gratitude and appreciation on social media

platforms. Images: <user_img>, <user _img> [GEN]

Further, to train the design generation system 120 to understand the special token associated with the user provided design assets, training data records are created that include design descriptions including the user provided assets and model representation data that includes the special tokens for these user provided assets. An example training data record using the same model prompt as above is shown below -

> Type: Instagram post. Description: This Instagram post template features a modern and eye-catching design with a sky blue background. The main focus is a "thank you" message, surrounded by colorful paper cutouts arranged in a heart shape.
> this template is perfect for expressing gratitude and appreciation on social media platforms. Images: <user_img>, <user _img> [GEN]
> <bkg-image> [IMAGE]
> <image> 127 0 124 57 0 0 [URET]
> <text> thank you! [txtparams] [COLOUR] 43 [] 71 107 114 88 -13 0 [FONT]
> <image> 128 10 124 57 0 0 [URET]
> <image> 18 80 124 57 0 0 [IMAGE] [EOS]

In the present disclosure, processing is described as being performed with respect to individual design pages. To this end, and unless stated otherwise, reference to a design herein is reference to a single page of a design. The techniques described herein may, however, be adapted to be applied to multi-page designs, for example by the design having multiple pages and processing each page of a multi-page design separately.

*Aspect ratio of media items*

As described previously, a media encoder 304A is utilized to generate vector embeddings based on input media items. Such encoders typically require media items of a particular fixed size, such that the size of the media items does not affect the vector embeddings, and only the content of the media items affects it. For example, image encoders, such as CLIP, require input images to have a fixed size of 224 x 224. Although the fixed size images help the media encoder maximize semantic information between text and the images, it also causes the design generation system 120 to learn a single image size/aspect ratio.

When the design generation system 120 generate designs, it may always include image placeholders of a fixed, square size (e.g., 224 x 224) as it has learnt that all training data images have the same size. This can be problematic, as the images retrieved at step 1306 may not always match the placeholder dimensions, given they may have completely different aspect ratios. To fit an image with a different aspect ratio in a placeholder having a particular aspect ratio during method 1400, the design generation system 120 may stretch the image along one dimension, while keeping the other dimension fixed.

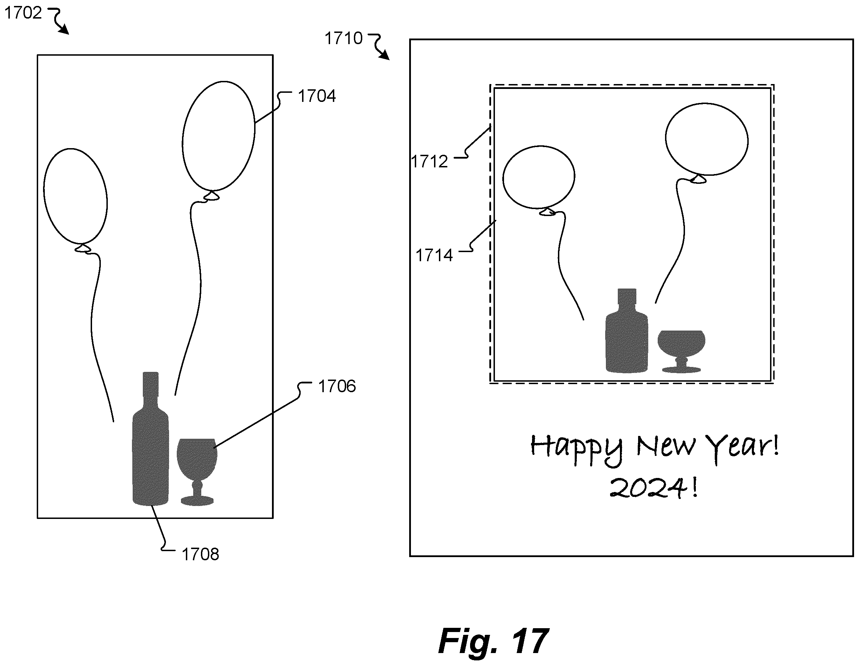

For example, consider the image 102 shown in Fig. 17. The image includes two balloons 1704, a wine glass 1706 and a wine bottle 1708. The image 1702 has a relatively rectangular aspect ratio. However, when this image 1702 is added to a design 1710 that has a placeholder 1712 with a rather squarish aspect ratio, the image 1702 is expanded horizontally and reduced vertically to fit in the placeholder 1712. The resulting image is displayed in Fig. 17 as 1714.

As seen in the design 1710, the image 1714 is stretched horizontally, and the balloons 1704 look a little too round due to the stretching. Further, the bottle 1708 and wine glass 1706 also look shorter and broader than typical wine glasses/bottles. This can result in generation of poor-quality designs 1710 that do not look professional.

One solution to address this issue may be to introduce post-processing of the design to fix the aspect ratios of image placeholders after generation. For example, the bounding box or image placeholder 1712 can be increased or decreased in size such that it can fit an image (e.g., image 1702) vertically. However, this solution may not result in accurate results as it may create gaps between the image and any captions already present in the design (if the existing placeholder is made smaller) or cause captions to overlap portions of the image (if the existing placeholder is expanded). Further, as the size of the placeholder is increased or decreased, depending on the largest dimension of the input image, this technique may introduce some ambiguity as to where the image is placed in the larger bounding box - i.e., centre aligned, left aligned, right aligned, and so on. Accordingly, there is a need for correcting the aspect ratio of images in automatically generated designs during the design generation process.

Aspects of the present embodiment provide a new mechanism for adapting the output of the design generation system 120 to predict the correct bounding boxes (top, left, width and height, i.e. correct aspect ratio and placement) for images during inference by feeding the actual aspect ratio of the retrieved images to the design generation system 120 during retrieval. This leverages the capability of neural networks to learn numerical relationships such as division (width/height), that are present in the training data.

To do so, the media database 134 of images stores not only the image embeddings and corresponding location data for the images, but also stores the aspect ratios of the images. When the design generation system 120 retrieves an image nearest to an embedding generated by the model from the vector database, it also retrieves the aspect ratio of the image. This aspect ratio is fed to the design generation system 120, and it predicts widths and heights for a bounding box of the image that correspond to the provided aspect ratio.

Further, in this embodiment, when the model representation data is generated (e.g., in method 700), the format of any image data in the model representation data is altered. For example, if at step 710, the training module 116 determines that the design record includes any image elements, the method proceeds to step 712, where the training module 116 generates an image component for each image element record in the design record.

In case the image element is GRAPHIC or IMAGE, the generated media component starts with a corresponding element indicator structural token such as "<svg>" or "<image>", respectively. The media component further includes a token representing its aspect ratio (i.e., width/height), tokens representing its bounding box coordinates and a special token, e.g., "[IMG: vector embedding]" that includes special characters that indicate that it is a special token, and a placeholder for the vector embedding of the media item.

An example of an image component generated at this step for an IMAGE media element may be -
[aspect ratio] [top][left][width][height][rotation][z-index] [IMG: vector embedding]

In this example, the image component starts with the structural token for an image followed by an aspect ratio token and the bounding box coordinates - the x,y coordinates of the bounding box's top left corner, the width of the bounding box, its height, its rotation, and its z-index value.

If the design record includes multiple image element records, the training module 116 generates multiple image components at this step.

Thereafter, when the design generation system is trained (e.g., in method 900), the aspect ratio token is also added to the text embedding space and the weights of the various sub-models of the design generation system 120 are set at step 902. The LLM 302 is subsequently trained to learn the meaning of the aspect ratio token and the relationship between the aspect ratio token and other tokens (e.g., the height and width tokens) added to the text embedding space.

As the aspect ratio token is a numerical token, it may be initialized with the pre-existing embedding for that token if the numerical value already exists in the existing vocabulary of the LLM embedding layer 412. Conversely, if the aspect ratio is represented by multiple tokens in the existing vocabulary of the LLM embedding layer 412, the new embedding is initialized as the aggregate of the existing vector embeddings representing that aspect ratio number.

The remainder of the training method 900 remains the same - i.e., the design generation system 120 is trained to predict the next token in the model representation data by minimizing a loss function. By using the model representation data for image elements that includes the aspect ratio token, the design generation system 120 is trained to predict the aspect ratio of images after predicting the image vector embedding. Further, as the design generation system 1xx is trained on numerous design records with different aspect ratio tokens that are always followed by corresponding width and height tokens, which satisfy the formula aspect ratio = width/height, the design generation system also learns the relationship between the aspect ratio token and the width, height tokens of an image element in the training data design records.

During inference, as described previously, the design generation system 120 generates the model representation data autoregressively. However, if the design generation system 120 generates a special token for an image, it pauses the autoregressive generation, retrieves an image asset corresponding to the special token from the design asset library 132 along with its aspect ratio, replaces the <IMG> special token and the subsequent aspect ratio token with the embedding for that image asset and its aspect ratio in the generated model representation data, and provides the special tokens for that image asset and aspect ratio as the previously generated special tokens to the input of the LLM and continues the autoregressive generation.

The method for generating a design at inference according to this embodiment remains the same as that previously described with reference to Fig. 10-12. However, at step 1210, if the LLM 302 determines that the next token is a special token associated with an image asset, method 1800 is invoked. The LLM determines that the next token is a special token associated with an image asset, e.g., if it has a particular format, such as the special characters IMAGE at the beginning of the token. If the LLM 302 determines that the next token is a special token associated with an image asset, method 1800 is invoked.

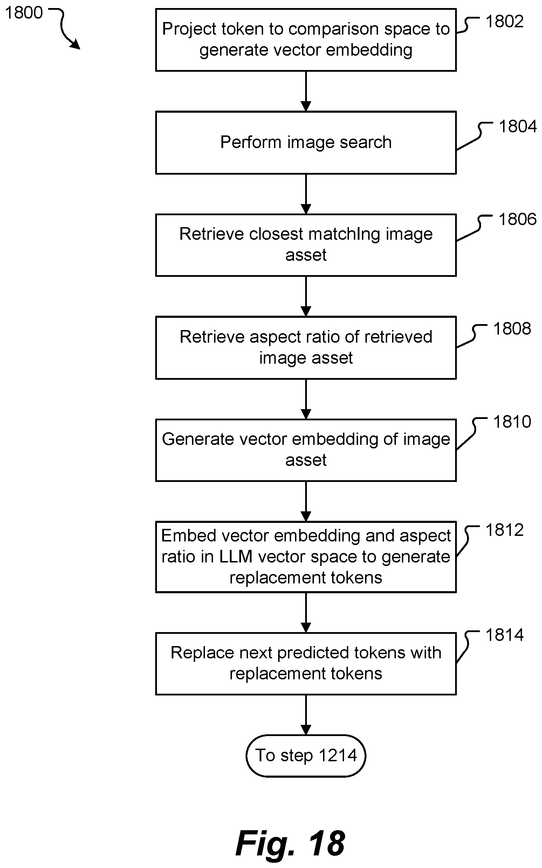

This method is described in detail with reference to Fig. 18. In particular, Fig. 18 depicts an example method for processing a special token associated with an image asset. The method 1800 commences at step 1802, where the last hidden layer corresponding to the special token is projected to the common embedding space. In some embodiments, to do so, the special token (corresponding to an image asset) is communicated to the output comparison projection layer 310. This layer projects or maps the vector embedding of the special token to the common embedding space.

Projecting the special token to the common embedding space includes performing a linear transformation, such as a matrix multiplication followed by a bias addition to the vector embedding of the special token. For an image embedding (which might have thousands of dimensions representing features extracted from the image), transforming to the common embedding space (which might have hundreds of dimensions representing features extracted from different modalities) involves multiplying the image embedding vector by a matrix of appropriate dimensions and adding a bias vector to align the image embedding with the common embedding space.

This transformation process changes the vector embedding values as the original values are multiplied by different weights and biases to fit into the new space. However, the transformation still preserves or captures relevant information from the original embedding while aligning it with the common embedding space.

At step 1804, the output module 118 receives the vector embedding value from the common embedding space and uses this vector embedding value to perform a search for an image asset in the media library 134.

In some examples, the common embedding space vector embeddings are precomputed for each image asset stored in the design asset library 132 and indexed as described previously. In such examples, the common embedding space vector embedding of the predicted next token is compared with the common embedding space vector embeddings of all the image assets stored in the corresponding design asset library 132 to determine the image asset that has the most similar vector embedding to the vector embedding of the next predicted token.

In some examples, identifying the closest matching vector embedding involves measuring a similarity or distance between the vectors in the vector space. These can be measured using any known techniques such as Euclidean distance or cosine similarity as described previously.

At step 1806, the identified closest matching image asset is retrieved. If the actual image asset is retrieved instead of its vector embedding (e.g., in case the vector embedding is not present), the method proceeds to step 1808, where the closest matching design asset is processed by the media encoder 304A to generate a vector embedding for the image asset.

As described previously, the aspect ratio of the image assets is stored in the media library 134 in association with image assets in this embodiment. At step 1810, the aspect ratio of the selected image asset is retrieved, e.g., by performing a lookup in the media library 134.

Next, at step 1812, as the embedding generated by the media encoder 304A (or retrieved from the design asset library 132) is for images, the vector embedding is passed to the input projection layer 306 associated with the media encoder 304A to project or map the vector embedding to the text embedding space. Similarly, the aspect ratio value is projected or mapped to the text embedding space at this step. This is similar to step 906 and therefore not described here again in detail.

The LLM 302 then replaces the vector embedding of the predicted image token (selected at step 1208) with the mapped vector embedding of the closest matching image asset to generate a replacement token) at step 1814. The retrieved aspect ratio token is also fed to the LLM 302 at this step. The method then proceeds to step 1214, where the image replacement token and aspect ratio token are provided to the input of the LLM 302 so that it can recommence the autoregressive token generation. That is, thereafter, the LLM 302 predicts the bounding box tokens for the image element based on the image embedding and the aspect ratio token. As the LLM 302 has learnt the relationship between the aspect ratio and the width and height of image elements, the LLM 302 can correctly predict the width and height elements of the bounding box tokens.

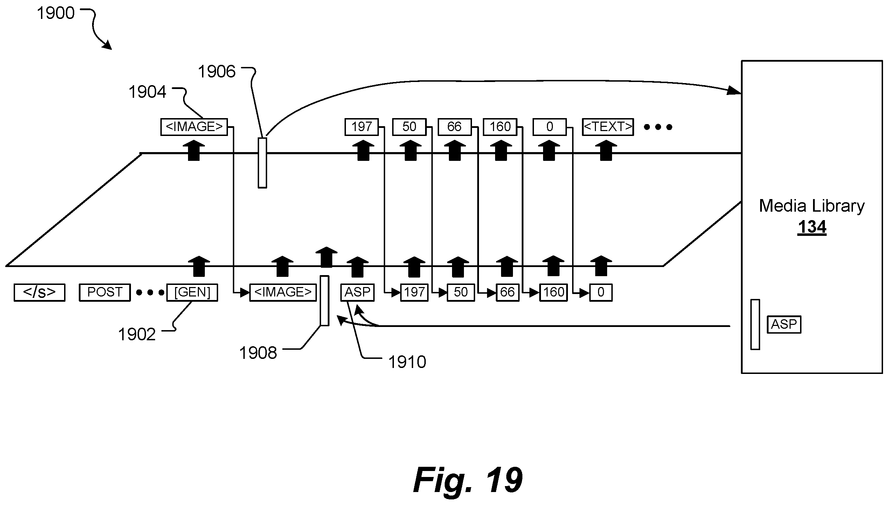

Fig. 19 illustrates a schematic representation 1900 of method 1800. The schematic illustrates inputs to the LLM 302 at the bottom and predicted outputs of the LLM 302 at the top. The LLM begins predicting the next token once it encounters the [GEN] token 1902 in the input. In this example, the LLM 302 predicts an <IMAGE> special token 1904 in response to encountering the [GEN] token in the input. It then predicts a vector embedding 1906 for the <IMAGE> special token. This vector embedding 1906 is then used to retrieve an image asset and corresponding aspect ratio from the media library 134(as described with reference to method 1800). The vector embedding 1908 of the identified image asset is provided as an input along with its aspect ratio 1910 to the LLM 302 and added to the LLM output so far. The LLM 302 then utilizes the image embedding 1908 and aspect ratio token 1910 to predict the bounding box tokens (e.g., 197, 50, 66, 160 in this example) for the image element.

**Clauses**

Further examples of specific feature combinations taught within the present disclosure are set out in the following sets of numbered clauses -

Clause A1: A method for generating model representation data for a design, the method including: selecting a design record associated with the design, the design record including data associated with one or more design elements in the design; and generating the model representation data, wherein the model representation data includes a design component corresponding to each design element in the design record, each design component including a structural token indicator indicating a type of the design component, and at least one special token corresponding to a design asset of the corresponding design element.

Clause A2: The method of clause A1, wherein generating the model representation data includes generating a background design component based on a background design element in the design record, the background design component including a structural token indicating the design component is a background design element and a special token including a vector embedding of the background design element.

Clause A3: The method of clause A1, wherein generating the model representation data further includes: determining whether the design record includes a text design element; and upon determining that the design record includes the text design element, generating a text design component corresponding to the text design element.

Clause A4: The method of clause A3, wherein the text design component including: a structural token indicating the design component is a text element; positional information tokens representing positional information about the text design element with respect to the design; text tokens representing the text defined by the text design element, and parameter tokens representing one or more parameters of the text.

Clause A5: The method of Clause A4, wherein the parameter tokens include a special token including a vector embedding of a font used in the text design element.

Clause A6: The method of clause A5, further including generating the vector embedding of the font special token by: retrieving the font of the text design element; rendering a text sample image using the retrieved font; and providing the text sample image to a trained encoder configured to generate the vector embedding of the font based on the text sample image.

Clause A7: The method of any one of clauses A1-6, wherein generating the model representation data further includes: determining whether the design record includes a media design element; and upon determining that the design record includes the media design element, generating a media design component corresponding to the media design element.

Clause A8: The method of Clause A7, wherein the media design component includes: a structural token indicating the design component is a media element; positional information tokens representing positional information about the media element with respect to the design; and a special token including a vector embedding of the media element.

Clause A9: The method of clause A8, further including generating the vector embedding of the media item.

Clause A10: The method of clause A9, wherein generating the vector embedding of the media item includes: retrieving the media item; normalizing the retrieved media item to a preset value; and providing the normalized media item to a trained media encoder configured to generate the vector embedding of the media item based on the normalized media item.

Clause A11: The method of any one of clauses A1-8, wherein generating the model representation data further includes: determining whether the design record includes a colour element; and upon determining that the design record includes the colour element, generating a colour design component corresponding to the colour design element.

Clause A12: The method of clauses A9, wherein the colour design component including: a structural token indicating the design component is a colour element; positional information tokens representing positional information about the colour element with respect to the design; and a special token including a vector embedding of the colour element.

Clause A13: The method of clause A12, further including generating the vector embedding of the colour element.

Clause A14: The method of clause A13, wherein generating the vector embedding of the colour item includes: retrieving the colour; generating a colour patch image based on the retrieved colour; and providing the colour patch image to a trained media encoder configured to generate the vector embedding of the colour element based on the colour patch image.

Clause A15: The method of any one of clauses A4-A14, wherein the positional information tokens include: four bounding box tokens representing a minimum rectangular area that encloses the text design element, the four bounding box tokens includes two numbers indicating x and y coordinates of a top left corner of the minimum rectangular area, a number indicating a width of the minimum rectangular area, and a number indicating a height of the minimum rectangular area; one rotation token defining a rotation in degrees of the text design element, and a z-index token indicating a depth of the text design element in the design.

Clause A16: The method of clause A15, wherein the positional information tokens include special tokens indicating the positional information tokens are to be learnt by a machine learning model during training.

Clause A17: The method of any one of clauses A15-16, wherein the positional information about the design element is quantized into preselected N x N bins.

Clause A18: The method of any one of clauses A1-A17, wherein the design representation data further including a design type field indicating a type of the design.

Clause A19: The method of any one of clauses A1-A18, wherein the design has a training design size.

Clause A20: The method of clause A19, further including: determining whether the training design size is different from an original design size of the design based the design type field; and upon determining that the training design size is different from the original design size, translating the numbers indicating the x and y coordinates of the top left corner of the minimum rectangular area, the number indicating the width of the minimum rectangular area, and the number indicating a height of the minimum rectangular area from a set of original numbers based on the original design size to translated numbers based on the training design size.

Clause A21: A computer processing system including: one or more processing units; and one or more non-transitory computer-readable storage media storing instructions, which when executed by the one or more processing units, cause the one or more processing units to perform a method according to any one of clauses A1-A20.

Clause A22: One or more non-transitory storage media storing instructions executable by one or more processing units to cause the one or more processing units to perform a method according to any one of clauses A1 to A20.

Clause B1: A method for training a design generation system to generate an editable design, the design generation system including a pre-trained large language model (LLM), the method including: initializing parameters of the pre-trained LLM; adding a set of structural tokens and a set of special tokens to a vocabulary of the pre-trained LLM; sequentially providing a plurality of training data records to the design generation system, each training data record including: a natural language design description associated with a corresponding training design, and model representation data associated with the corresponding training design, the model representation data including a sequence of tokens, the sequence of tokens including one or more of the set of structural tokens and one or more of the set of special tokens; and progressively training the design generation system based on the sequentially provided training data records to learn the set of structural tokens and the set of special tokens such that the design generation system can accurately generate a first model representation data based on an input natural language design description.

Clause B2: The method of clause B1, wherein the LLM is an autoregressive system that is configured to generate the model representation data one token at a time.

Clause B3: The method of any one of clauses B1-B2, wherein progressively training the design generation system includes determining a loss function by comparing a predicted token generated by the LLM with a ground truth of the token in the sequence of tokens.

Clause B4: The method of any one of clauses B1-B3, further including masking a pre-existing vocabulary of the pre-trained LLM during the training.

Clause B5: The method of any one of clauses B3-B4, wherein training the LLM to learn the set of structural tokens and the set of special tokens includes back-propagating the loss function to update one or more weights and biases of the LLM associated with the set of structural tokens and the set of special tokens while maintaining one or more weights and biases of the LLM associated with the pre-existing vocabulary of the LLM.

Clause B6: The method of any one of clauses B1-B5, further including utilizing low rank adaptation (LoRA) to train the LLM to learn the set of structural tokens and the set of special tokens.

Clause B7: The method of any one of clauses B3-B6, wherein the design generation system further includes one or more input projection layers, and the method further including mapping vector embeddings associated with the one or more of the set of special tokens to an embedding space associated with the LLM using the one or more input projection layers.

Clause B8: The method of clause B7, further including back-propagating the loss function to the one or more input projection layers to update weights and biases of the one or more input projection layers to accurately map the vector embeddings associated with the one or more of the set of special tokens to the embedding space associated with the LLM.

Clause B9: The method of any one of clauses B3-B8, wherein the design generation system further including one or more input comparison projection layers and one or more output comparison projection layers, and the method further including: mapping vector embeddings associated with the one or more of the set of special tokens to a common embedding space using the one or more input comparison projection layers; and mapping vector embeddings associated with predicted special tokens generated by the LLM to the common embedding space using the one or more output comparison projection layers.

Clause B10: The method of clause B9 further including training the one or more output comparison projection layers based on a contrastive loss computed between the vector embeddings associated with predicted special tokens generated by the LLM in the common embedding space and the vector embeddings associated with a ground truth of the one or more of the set of special tokens in the common embedding space.

Clause B11: The method of clause B10, wherein training the one or more output comparison projection layers includes back-propagating the computed contrastive loss to update weights and biases of the one or more output comparison projection layers and the input comparison projection layers.

Clause B12: The method of any one of clauses B1-B11, wherein the design generation system further including one or more encoders, and the method further includes generating, using the one or more encoders, the vector embeddings for the one or more special tokens.

Clause B13: A computer processing system including: one or more processing units; and one or more non-transitory computer-readable storage media storing instructions, which when executed by the one or more processing units, cause the one or more processing units to perform a method according to any one of clauses B1 to B12.

Clause B14: One or more non-transitory storage media storing instructions executable by one or more processing units to cause the one or more processing units to perform a method according to any one of clauses B1 to B12.

Clause C1: A retrieval-based design generation system configured to generate editable designs, the system including: an auto-regressive pre-trained large language model (LLM) configured to: receive a prompt to generate the editable design, sequentially generate a set of tokens of model representation data for the editable design, the set of tokens including a predicted special token associated with a design asset, provide each sequentially generated non-special token of the set of tokens as an input to the LLM to generate a next token in the set of tokens; and replace the predicted special token with a replacement special token associated with a design asset stored in a design asset library and provide the replacement special token as the input to the LLM to generate the next token in the set of tokens.

Clause C2: The retrieval-based design generation system of clause 1, wherein the LLM is further configured to output the model representation data for the editable design in the form of the set of tokens, where any special tokens associated with a design asset are replaced by corresponding replacement special tokens.

Clause C3: The retrieval-based design generation system of clause C2, wherein the LLM is configured to output the model representation data for the editable design upon generating an end-of-sequence token.

Clause C4; The retrieval-based design generation system of any one of clauses C1-3 further including: one or more output comparison projection layers configured to map a vector embedding of the predicted special token generated by the LLM to a common embedding space to generate a predicted vector embedding.

Clause C5: The retrieval-based design generation system of clause C4 further including: a design asset library including vector embeddings of a plurality of design assets stored in the design asset library.

Clause C6: The retrieval-based design generation system of clause C5, further including one or more input comparison projection layers configured to map the vector embeddings of the plurality of design assets stored in the design asset library to the common embedding space.

Clause C7: The retrieval-based design generation system of clause C6, further including a module configured to

40

perform a search in the common embedding space using the predicted vector embedding to identify the design asset stored in the design asset library that has a vector embedding in the common embedding space that is a closest match to the predicted vector embedding.

Clause C8: The retrieval-based design generation system of any one of clauses C1-C7 further including one or more input projection layers configured to map the vector embedding that is a closest match to the predicted vector embedding to an embedded space associated with the LLM to generate the replacement special token.

Clause C9: The retrieval-based design generation system of any one of clauses C1-8, wherein sequentially generating the set of tokens of model representation data further includes: for each token in the set of tokens: determining a set of potential next tokens; generating a probability mass function for the set of potential next tokens; and selecting the token from the set of potential next tokens based on the probability mass function.

Clause C10: The retrieval-based design generation system of clause C9 wherein selecting the token from the set of potential next tokens is based on a sampling method.

Clause C11; The retrieval-based design generation system of clause C10, wherein the sampling method is a greedy sampling method that selects the token from the set of potential next tokens that has a highest conditional probability in the probability mass function.

Clause C12: The retrieval-based design generation system of clause C10, wherein the sampling method is a nucleus sampling method which includes: sorting the set of potential next tokens based on probability values in the probability mass function; selecting a top-p tokens from the sorted set of potential next tokens; selecting the token from the top-p tokens deterministically or stochastically.

Clause C13: The retrieval-based design generation system of clause C10, wherein the sampling method is a modified nucleus sampling method including a linearly decaying probability schedule, where a predetermined probability p for selecting the top-p tokens is gradually decreased based on a position of the token in the set of tokens.

Clause C14: The retrieval-based design generation system of clause C13, wherein the set of tokens further includes one or more structural tokens.

Clause C15: The retrieval-based design generation system of clause C14, further including excluding the predicted special token and the one or more structural tokens from application of the linearly decaying probability schedule.

Clause C16: The retrieval-based design generation system of clause C15 further including utilizing a greedy sampling method for the predicted special token and the one or more structural tokens.

Clause D1: A method for generating an editable design using an auto-regressive pre-trained large language model (LLM), the method including: receiving a prompt to generate the editable design; sequentially generating a set of tokens of model representation data for the editable design, each token in the set of tokens defining an attribute of the editable design; for each token in the set of tokens, determining whether the token is a predicted special token associated with a design asset or a non-special token; upon determining that the token is a non-special token, providing the non-special token as an input to the LLM to generate a next token in the set of tokens; upon determining that the token is a predicted special token: replacing the predicted special token with a replacement special token associated with a design asset stored in a design asset library; and providing the replacement special token as the input to the LLM to generate the next token in the set of tokens.

Clause D2: The method of clause D1, further including outputting the model representation data for the editable design in the form of the set of tokens, where any predicted special tokens associated with design assets are replaced by corresponding replacement special tokens.

Clause D3: The method of clause D2, further including: detecting generation of an end-of-sequence token; and outputting the model representation data for the editable design upon detecting the end-of-sequence token.

Clause D4: The method of any one of clauses D1-D3, further including: mapping a vector embedding of the predicted special token to a common embedding space to generate a predicted vector embedding.

Clause D5: The method of clause D4 further including: generating vector embedding of a plurality of design assets stored in the design asset library.

Clause D6: The method of clause D5, further including mapping the vector embeddings of the plurality of design assets stored in the design asset library to the common embedding space.

Clause D7: The method of clause D6, further including: performing a search in the common embedding space using the predicted vector embedding; identifying a vector embedding in the common embedding space that is a closest match to the predicted vector embedding; and retrieving the design asset from the design asset library corresponding to the identified vector embedding.

Clause D8: The method of clause D7 further including: mapping the identified vector embedding to an embedding space associated with the LLM to generate the replacement special token.

Clause D9: The method of clause D8 further including: for each sequentially generated token: generating a probability mass function that assigns probability values to a set of potential next tokens; and selecting the generated token from the set of potential next tokens based on the probability mass function.

Clause D10: The method of clause D9 wherein selecting the token from the set of potential next tokens is based on a sampling method.

Clause D11; The method of clause D10, wherein selecting the generated token from the set of potential next tokens includes selecting the token that has a highest probability value in the probability mass function.

Clause D12: The method of clause D10, wherein selecting the generated token from the set of potential next tokens includes: sorting the set of potential next tokens based on the probability values in the probability mass function; selecting a top-p tokens from the sorted set of potential next tokens; and selecting the token from the top-p tokens deterministically or stochastically.

Clause D13: The method of clause D12, wherein selecting the generated token from the set of potential next tokens includes utilizing a linearly decaying probability schedule, where a predetermined probability p for selecting the top-p tokens is gradually decreased based on a position of the generated token in the set of tokens.

Clause D14: The method of clause D13, wherein the set of tokens further includes one or more structural tokens.

Clause D15: The method of clause D14, further including excluding the predicted special token and the one or more structural tokens from application of the linearly decaying probability schedule.

Clause D16: The method of clause D15 further including selecting the token that has a highest probability value in the probability mass function for the predicted special token and the one or more structural tokens.

Clause D17: A computer processing system including: one or more processing units; and one or more non-transitory computer-readable storage media storing instructions, which when executed by the one or more processing units, cause the one or more processing units to perform a method according to any one of clause D1 to D16.

Clause D18: One or more non-transitory storage media storing instructions executable by one or more processing units to cause the one or more processing units to perform a method according to any one of clause D1 to D16.

Clause E1: A method for selecting one or more designs from a set of candidate designs, the method including: receiving the set of candidate designs, the set of candidate designs associated with an input prompt for generating a design; rendering images of the set of candidate designs; computing similarity scores for each candidate design in the set of candidate designs, the similarity scores computed based on comparing the rendered images of the candidate designs with the input prompt for generating the design; ranking the candidate designs based on the similarity scores; and selecting the one or more designs from the set of candidate designs based on the ranking.

Clause E2: The method of clause E1, further including: computing a quality score for each candidate design in the set of candidate designs, the quality scores computed based on the rendered images of the candidate designs.

Clause E3: The method of clause E2, wherein ranking the candidate designs further includes ranking the candidate designs based on the quality scores.

Clause E4: The method of any one of clause E1-E3 wherein computing the similarity scores includes computing a contrastive language-image pretraining (CLIP) score.

Clause E5: The method of clause E4, wherein computing the CLIP score includes: generating a set of tuples for the set of candidate designs, each tuple including the rendered image of a corresponding candidate design and the input prompt; providing the set of tuples to a visual encoder that is trained to assess similarity between an input image and an input prompt; and receiving the CLIP score for each candidate design in the set of candidate designs from the visual encoder.

Clause E6: The method of any one of clauses E1-5, wherein selecting the one or more designs from the set of candidate designs includes selecting top n candidate designs from the ranked candidate designs.

Clause E7: The method of any one of clause E1-6 further including: retrieving design records for the selected one or more designs; and communicating the retrieved design records to a client device to cause the client device to display the selected one or more designs on a display of the client device.

Clause E8: A computer processing system including: one or more processing units; and one or more non-transitory computer-readable storage media storing instructions, which when executed by the one or more processing units, cause the one or more processing units to perform a method according to any one of clauses E1 to E7.

Clause E9: One or more non-transitory storage media storing instructions executable by one or more processing units to cause the one or more processing units to perform a method according to any one of clauses E1 to E7.

Clause F1: A computer-implemented method for generating training data to train a machine learning model to generate a design, the method including: selecting a plurality of design records, each design record associated with a training design and including at least a design type attribute and data associated with one or more design elements in the training design; retrieving a natural language design description for each of the plurality of design records; generating model representation data for each selected design record, the model representation data including one or more design components corresponding to the one or more design elements in the training design, each design component including at least one structural token and at least one special token; and generating a training data record for each of the plurality of design records, each the training data record including the natural language design description associated with a corresponding training design and the model representation data associated with the corresponding training design.

Clause F2: The method of clause F1, wherein the structural token provides information regarding a structure of the model representation data and the special token indicating a non-text modality.

Clause F3: The method of any one of clauses F1-F2, wherein retrieving the natural language design description includes generating the natural language design description.

Clause F4: The method of clause F3, wherein generating the natural language design description includes: retrieving a corresponding design record; rendering an image of a training design based on the design record; and generating the natural language design description based on the image of the training design.

Clause F5: The method of clause F4, further including: generating one or more design captions based on the image of the training design; and generating the natural language design description based on the one or more design captions.

Clause F6: The method of any one of clauses F1-F5, wherein each training data record further including a design type.

Clause F7: The method of any one of clauses F1-F6, wherein each training data record further including an end-of-sequence token.

Clause F8: The method of any one of clauses F1-F7, wherein the special token indicates one of a number, or a design asset including one of a media item, a colour, or a font.

Clause F9: The method of clause F8, wherein the special token indicating the design asset includes a text string defining the special token and a vector embedding of a design asset associated with the corresponding design component.

Clause F10: The method of clause F9, further including generating the vector embedding of the design asset.

Clause F11: The method of clause F9, wherein generating the vector embedding of the media item design asset includes: retrieving the media item design asset; normalizing the retrieved media item design asset to a preset value; and providing the normalized media item design asset to a trained media encoder configured to generate the vector embedding of the media item design asset based on the normalized media item.

Clause F12: The method of clause F9, wherein generating the vector embedding of the font design asset includes: retrieving the font design asset; rendering a text sample image using the retrieved font design asset; and providing the text sample image to a trained encoder configured to generate the vector embedding of the font design asset based on the text sample image.

Clause F13: The method of clause F9, wherein generating the vector embedding of the colour design asset includes: retrieving the colour design asset; generating a colour patch image based on the retrieved colour design asset; and providing the colour patch image to a trained media encoder configured to generate the vector embedding of the colour design asset based on the colour patch image.

Clause F14: The method of any one of clauses F1-F13, wherein each design component of the one or more design components commences with an element type structural token that indicates a type of the design component.

Clause F15: The method of any one of clauses F1-F14, wherein the one or more design components include at least one of a background component, a text component, a media component, or a colour component.

Clause F16: A computer processing system, including: one or more processing units; and one or more non-transitory computer-readable storage media storing instructions, which when executed by the one or more processing units, cause the one or more processing units to perform a method according to any one of clauses F1 to F15.

Clause F17: One or more non-transitory storage media storing instructions executable by one or more processing units to cause the one or more processing units to perform a method according to any one of clauses F1 to F15.

Clause G1: A method for generating model representation data for a design, the method including: selecting a design record associated with the design, the design record including data associated with one or more design elements in the design; and generating the model representation data, wherein the model representation data includes a design component corresponding to each design element in the design record, each design component including a structural token indicator indicating a type of the design component, and at least one special token corresponding to a design asset of the corresponding design element, wherein generating the model representation data further includes: determining whether the design record includes an image element; and upon determining that the design record includes the image element, generating an image component corresponding to the image element, wherein the image component includes: a structural token indicating the image component is an image element; an aspect ratio token representing an aspect ratio of the image element; positional information tokens representing positional information about the image element with respect to the design; and a special token including a vector embedding of the image element.

Clause G2: The method of clause G1, further including generating the vector embedding of the image item.

Clause G3: The method of clause G2, wherein generating the vector embedding of the image item includes: retrieving the image item; normalizing a size of the retrieved image item to a preset size; and providing the normalized image item to a trained image encoder configured to generate the vector embedding of the image item based on the normalized image item.

Clause G4: The method of any one of clauses G1-3, wherein the positional information tokens include: four bounding box tokens representing a minimum rectangular area that encloses the text design element, the four bounding box tokens includes two numbers indicating x and y coordinates of a top left corner of the minimum rectangular area, a number indicating a width of the minimum rectangular area, and a number indicating a height of the minimum rectangular area; one rotation token defining a rotation in degrees of the text design element, and a z-index token indicating a depth of the text design element in the design.

Clause G5: The method of any one of clauses G1-4, wherein the aspect ratio and positional information tokens include special tokens indicating the aspect ratio token and the positional information tokens are to be learnt by a machine learning model during training.

Clause G6: A method for training a design generation system to generate an editable design, the design generation system including a pre-trained large language model (LLM), the method including: initializing parameters of the pre-trained LLM; adding a set of structural tokens and a set of special tokens to a vocabulary of the pre-trained LLM, the set of special tokens including aspect ratio tokens indicating aspect ratios of image elements in a plurality of training data records; sequentially providing the plurality of training data records to the design generation system, each training data record including: a natural language design description associated with a corresponding training design, and model representation data associated with the corresponding training design, the model representation data including a sequence of tokens, the sequence of tokens including one or more of the set of structural tokens and one or more of the set of special tokens; progressively training the design generation system based on the sequentially provided training data records to learn the set of structural tokens and the set of special tokens such that the design generation system can accurately generate a first model representation data based on an input natural language design description.

Clause G7: The method of clause G6, wherein the LLM is an autoregressive system that is configured to generate the model representation data one token at a time.

Clause G8: The method of any one of clauses G6-7, wherein progressively training the design generation system includes determining a loss function by comparing a predicted token generated by the LLM with a ground truth of the token in the sequence of tokens.

Clause G9: The method of any one of clauses G6-8, further including masking a pre-existing vocabulary of the pre-trained LLM during the training.

Clause G10: A method for generating an editable design using an auto-regressive pre-trained large language model (LLM), the method including: receiving a prompt to generate the editable design; sequentially generating a set of tokens of model representation data for the editable design, each token in the set of tokens defining an attribute of the editable design; for each token in the set of tokens, determining whether the token is a predicted special token associated with an image asset or a non-special token; upon determining that the token is a non-special token, providing the non-special token as an input to the LLM to generate a next token in the set of tokens; upon determining that the token is a predicted special token associated with an image asset: replacing the predicted special token with a replacement special token associated with an image asset stored in a design asset library and an aspect ratio token indicating an aspect ratio of the image asset; and providing the replacement special token and the aspect ratio token as the input to the LLM to generate a next subset of tokens in the set of tokens.

Clause G11: The method of clause G10, wherein the next subset of tokens in the set of tokens includes at least a width token and a height token representing the width and the height of the image element, the width token and the height token are generated based on the aspect ratio token.

Clause G12: The method of any one of clauses G10-11, further including: detecting generation of an end-of-sequence token; and outputting the model representation data for the editable design upon detecting the end-of-sequence token.

Clause G13: The method of any one of clauses G10-12, further including: mapping a vector embedding of the predicted special token to a common embedding space to generate a predicted vector embedding.

Clause G14: The method of clause G13 further including: generating vector embeddings of a plurality of image assets stored in the design asset library.

Clause G15: The method of clause G14 further including mapping the vector embeddings of the plurality of image assets stored in the design asset library to the common embedding space.

Clause G16: The method of clause G15, further including: performing a search in the common embedding space using the predicted vector embedding; identifying a vector embedding in the common embedding space that is a closest match to the predicted vector embedding; retrieving the image asset from the design asset library corresponding to the identified vector embedding; and retrieving the aspect ratio of the image asset from the design asset library.

Clause G17: The method of clause G16 further including: mapping the identified vector embedding and the aspect ratio to an embedding space associated with the LLM to generate the replacement special token and the aspect ratio token.

Clause G18: A computer processing system including: one or more processing units; and one or more non-transitory computer-readable storage media storing instructions, which when executed by the one or more processing units, cause the one or more processing units to perform a method according to any one of clauses G1 to 17.

Clause G19: One or more non-transitory storage media storing instructions executable by one or more processing units to cause the one or more processing units to perform a method according to any one of clauses G1 to 17.

In the above embodiments certain operations are described as being performed by the client system 140 (e.g. under control of the client application 140) and other operations are described as being performed at the design generation server 110. Variations are, however, possible. For example in certain cases an operation described as being performed by client system 140 may be performed at the server 110 and, similarly, an operation described as being performed at the server 110 may be performed by the client system 140. Generally speaking, however, where user input is required such user input is initially received at client system 140 (by an input device thereof). Data representing that user input may be processed by one or more applications running on client system 140 or may be communicated to server environment 110 for one or more applications running on the server hardware 112 to process. Similarly, data or information that is to be output by a client system 140 (e.g. via display, speaker, or other output device) will ultimately involve that system 140. The data/information that is output may, however, be generated (or based on data generated) by client application 142 and/or the server environment 110 (and communicated to the client system 140 to be output).

Furthermore, in certain implementations a computer processing system 200 may be configured (by an application running thereon) to perform the processing described herein entirely independently of a server environment 110. In this case, the application running on that system is a stand-alone application and all instructions and data required to perform the operations described above are stored on that system.

The flowcharts illustrated in the figures and described above define operations in particular orders to explain various features. In some cases, the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by (or in conjunction with) different applications running on the same or different computer processing systems.

In the above description, certain operations and features are explicitly described as being optional. This should not be interpreted as indicating that if an operation or feature is not explicitly described as being optional it should be considered essential. Even if an operation or feature is not explicitly described as being optional it may still be optional.

The present disclosure provides various user interface examples. It will be appreciated that alternative user interfaces are possible. Such alternative user interfaces may provide the same or similar user interface features to those described and/or illustrated in different ways, provide additional user interface features to those described and/or illustrated, or omit certain user interface features that have been described and/or illustrated.

Unless otherwise stated, the terms "include" and "comprise" (and variations thereof such as "including", "includes", "comprising", "comprises", "comprised" and the like) are used inclusively and do not exclude further features, components, integers, steps, or elements.

In some instances the present disclosure and/or claims may use the terms "first," "second," etc. to identify and distinguish between elements or features. When used in this way, these terms are not used in an ordinal sense and are not intended to imply any particular order. For example, a first user input or first token could equally be referred to a second user input or second token without departing from the scope of the described examples. Furthermore, when used to differentiate elements or features, a second user input or second token could exist without a first user input or first token or a second user input or second token could occur before a first user input or first token.

It will be understood that the embodiments disclosed and defined in this specification extend to alternative combinations of two or more of the individual features mentioned in or evident from the text or drawings. All of these different combinations constitute alternative embodiments of the present disclosure.

The present specification describes various embodiments with reference to numerous specific details that may vary from implementation to implementation. No limitation, element, property, feature, advantage, or attribute that is not expressly recited in a claim should be considered as a required or essential feature. Accordingly, the specification and drawings are to be regarded in an illustrative rather than a restrictive sense.

**Claims**

1. A retrieval-based design generation system configured to generate editable designs, the system including an auto-regressive pre-trained large language model (LLM) configured to:

   receive a prompt to generate the editable design;
   sequentially generate a set of tokens of model representation data for the editable design, the set of tokens including a predicted special token associated with a design asset;
   provide each sequentially generated non-special token of the set of tokens as an input to the LLM to generate a next token in the set of tokens;
   replace the predicted special token with a replacement special token associated with a design asset stored in a design asset library;
   provide the replacement special token as the input to the LLM to generate the next token in the set of tokens; and
   output the model representation data for the editable design in the form of the set of tokens, where any special tokens associated with a design asset are replaced by corresponding replacement special tokens.

2. The retrieval-based design generation system of claim 1, wherein the LLM is configured to output the model representation data for the editable design upon generating an end-of-sequence token.

3. The retrieval-based design generation system of any one of claims 1-2 further including: one or more output comparison projection layers configured to map a vector embedding of the predicted special token generated by the LLM to a common embedding space to generate a predicted vector embedding.

4. The retrieval-based design generation system of claim 3 further including: a design asset library including vector embeddings of a plurality of design assets stored in the design asset library.

5. The retrieval-based design generation system of claim 4, further including one or more input comparison projection layers configured to map the vector embeddings of the plurality of design assets stored in the design asset library to the common embedding space.

6. The retrieval-based design generation system of claim 5, further including a module configured to perform a search in the common embedding space using the predicted vector embedding to identify the design asset stored in the design asset library that has a vector embedding in the common embedding space that is a closest match to the predicted vector embedding.

7. The retrieval-based design generation system of any one of claims 1-6 further including one or more input projection layers configured to map the vector embedding that is a closest match to the predicted vector embedding to an embedded space associated with the LLM to generate the replacement special token.

8. The retrieval-based design generation system of any one of claims 1-7, wherein sequentially generating the set of tokens of model representation data further includes:
   for each token in the set of tokens:

   determining a set of potential next tokens;
   generating a probability mass function for the set of potential next tokens; and
   selecting the token from the set of potential next tokens based on the probability mass function.

9. The retrieval-based design generation system of claim 8 wherein selecting the token from the set of potential next tokens is based on a sampling method.

10. The retrieval-based design generation system of claim 9, wherein the sampling method is a greedy sampling method that selects the token from the set of potential next tokens that has a highest conditional probability in the probability mass function.

11. The retrieval-based design generation system of claim 9, wherein the sampling method is a nucleus sampling method which includes:

    sorting the set of potential next tokens based on probability values in the probability mass function;
    selecting a top-p tokens from the sorted set of potential next tokens; and
    selecting the token from the top-p tokens deterministically or stochastically.

12. The retrieval-based design generation system of claim 9, wherein the sampling method is a modified nucleus sampling method including a linearly decaying probability schedule, where a predetermined probability p for selecting the top-p tokens is gradually decreased based on a position of the token in the set of tokens.

13. The retrieval-based design generation system of claim 12, wherein the set of tokens further includes one or more structural tokens.

14. The retrieval-based design generation system of claim 13, further including excluding the predicted special token and the one or more structural tokens from application of the linearly decaying probability schedule.

15. The retrieval-based design generation system of claim 14 further including utilizing a greedy sampling method for the predicted special token and the one or more structural tokens.

100

Client system **140**

Client application **142**

**150**

Design generation server **110**

Data storage **126**

Design data **128**

Training data **130**

Asset library **132**

Media **134**

Fonts **136**

Colours **138**

Computer processing hardware **112**

Data storage application **124**

Digital design application **114**

Training module **116**

Output module **118**

Design generation system **120**

Input generation model **122**

*Fig. 1*

FIG. 2

**Fig. 3**

400

418 — Softmax

416 — Linear

402 — Block 2 ... N

402

Add and Norm
**410**

Feed forward
**408**

Add and Norm
**406**

Masked Multi-
head attention
layer **404**

**414**  +

412 — Input
embedding

*Fig. 4*

**Fig. 5A**

**Fig. 5B**

600

| 602 | Select plurality of designs |

↓

| 604 | Generate model representation data for each selected design |

↓

| 606 | Generate design descriptions |

↓

| 608 | Generate training data |

## Fig. 6

800

| 802 | Retrieve design data for selected design |

↓

| 804 | Render design |

↓

| 806 | Generate design caption(s) |

↓

| 808 | Generate design description based on the design caption(s) |

## Fig. 8

700

Start

702 — Retrieve design data for
selected design

704 — Generate background
component

706 — Text? —Yes→ Generate text
component(s) 708

No

710 — Media? —Yes→ Generate media
component(s) 712

No

714 — Colour? —Yes→ Generate colour
component(s) 716

End

*Fig. 7*

900

902

Initialize model parameters

Retrieve an unprocessed training data record
904

Generate vector emebddings
906

Provide embeddings of design description and [GEN] token to LLM
908

910
LLM predicts next token

912
Determine cross entropy loss between predicted token and truth

914
More tokens?

No

Yes

916
Provide truth to LLM as previous token

*Fig. 9*

1000

```
┌──────────────────────────────┐
│ Receive design generation request │ ⟋ 1002
│      including user prompt          │
└──────────────────────────────┘
              │
              ▼
┌──────────────────────────────┐
│  Convert user prompt to model  │ ⟋ 1004
│            prompt               │
└──────────────────────────────┘
              │
              ▼
┌──────────────────────────────┐
│  Communicate model prompt to   │ ⟋ 1006
│   design generation system.     │
└──────────────────────────────┘
```

## *Fig. 10*

1100

```
┌──────────────────────────────┐
│  Generate design outline prompt │ ⟋ 1102
└──────────────────────────────┘
              │
              ▼
┌──────────────────────────────┐
│   Communicate design outline    │ ⟋ 1104
│ prompt to input generation model │
└──────────────────────────────┘
              │
              ▼
┌──────────────────────────────┐
│ Receive model prompt from input │ ⟋ 1106
│       generation model          │
└──────────────────────────────┘
```

## *Fig. 11*

**Fig. 12**

1300

Project token to comparison space to generate vector embedding — 1302

Perform design asset search — 1304

Retrieve closest match — 1306

Generator vector embedding — 1308

Embed in LLM vector space to generate replacement token — 1310

Replace next predicted token with replacement token — 1312

To step 1214

*Fig. 13*

1400

1402 — Initialize design data record

Select an unprocessed design
component from model
representation data — 1404

Convert unprocessed design
component to design element — 1406

yes

Unprocessed
components? — 1408

no

1410 — Communicate design data record
to client application

Render design on client system — 1412

*Fig. 14*

**Fig. 15**

1600

```
                    ┌─────────────────────────────┐  ┌─ 1602
                    │   Render candidate designs  │ ╱
                    └─────────────────────────────┘
                                   │
                                   ▼
                    ┌─────────────────────────────┐  ┌─ 1604
                    │ Compute similarity scores for each │ ╱
                    │       candidate design      │
                    └─────────────────────────────┘
                                   │
                                   ▼
                    ┌─────────────────────────────┐  ┌─ 1606
                    │  Rank candidate designs based on │ ╱
                    │       similarity score      │
                    └─────────────────────────────┘
                                   │
                                   ▼
                    ┌─────────────────────────────┐  ┌─ 1608
                    │ Select subset of candidate designs │ ╱
                    │        based on ranking     │
                    └─────────────────────────────┘
                                   │
                                   ▼
                    ┌─────────────────────────────┐  ┌─ 1610
                    │ Communicate subset of candidate │ ╱
                    │  designs to client application │
                    └─────────────────────────────┘
                                   │
                                   ▼
                    ┌─────────────────────────────┐  ┌─ 1612
                    │  Render design on client system │ ╱
                    └─────────────────────────────┘
```

## Fig. 16

**Fig. 17**

EP 4 641 436 A1

1800

Project token to comparison space to generate vector embedding ⟩ 1802

↓

Perform image search ⟩ 1804

↓

Retrieve closest matchIng image asset ⟩ 1806

↓

Retrieve aspect ratio of retrieved image asset ⟩ 1808

↓

Generate vector embedding of image asset ⟩ 1810

↓

Embed vector embedding and aspect ratio in LLM vector space to generate replacement tokens ⟩ 1812

↓

Replace next predicted tokens with replacement tokens ⟩ 1814

↓

( To step 1214 )

*Fig. 18*

**Fig. 19**

EP 4 641 436 A1

Europäisches
Patentamt

European
Patent Office

Office européen
des brevets

# EUROPEAN SEARCH REPORT

**Application Number**

EP 25 17 1936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/112710 A1 (HUANG ZIFENG [US] ET AL) 13 April 2023 (2023-04-13) * the whole document * | 1-15 | INV. G06F40/30 G06F40/103 G06N3/0475 |
| A | CN 116 541 911 A (DAJIA ZHIHE BEIJING NETWORK TECH CO LTD) 4 August 2023 (2023-08-04) * the whole document * | 1-15 | |
| A | SITONG WANG ET AL: "PodReels: Human-AI Co-Creation of Video Podcast Teasers", ARXIV.ORG, CORNELL UNIVERSITY LIBRARY, 201 OLIN LIBRARY CORNELL UNIVERSITY ITHACA, NY 14853, 17 March 2024 (2024-03-17), XP091701761, * the whole document * | 1-15 | |
| A | GERHARD PAA{\SS} ET AL: "Foundation Models for Natural Language Processing -- Pre-trained Language Models Integrating Media", ARXIV.ORG, CORNELL UNIVERSITY LIBRARY, 201 OLIN LIBRARY CORNELL UNIVERSITY ITHACA, NY 14853, 16 February 2023 (2023-02-16), XP091441629, * the whole document * | 1-15 | **TECHNICAL FIELDS SEARCHED (IPC)** G06F G06N |
| A | ARNAV GOEL ET AL: "Advancements in Scientific Controllable Text Generation Methods", ARXIV.ORG, CORNELL UNIVERSITY LIBRARY, 201 OLIN LIBRARY CORNELL UNIVERSITY ITHACA, NY 14853, 8 July 2023 (2023-07-08), XP091560977, * the whole document * | 1-15 | |

The present search report has been drawn up for all claims

| Place of search | Date of completion of the search | Examiner |
|---|---|---|
| Berlin | 31 August 2025 | Lechenne, Laurence |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 25 17 1936

31-08-2025

| Patent document cited in search report | Publication date | Patent family member(s) | Publication date |
|---|---|---|---|
| US 2023112710 A1 | 13-04-2023 | US 2023112710 A1 | 13-04-2023 |
| | | US 2023115185 A1 | 13-04-2023 |
| | | US 2023350651 A1 | 02-11-2023 |
| | | US 2025181328 A1 | 05-06-2025 |
| CN 116541911 A | 04-08-2023 | NONE | |

EPO FORM P0459